(19) Europäisches Patentamt
European Patent Office
Office européen des brevets

(11) **EP 4 750 174 A1**

(12) **EUROPEAN PATENT APPLICATION**
published in accordance with Art. 153(4) EPC

(43) Date of publication:
**27.05.2026  Bulletin 2026/22**

(21) Application number: **23945432.5**

(22) Date of filing: **18.07.2023**

(51) International Patent Classification (IPC):
**H04W 52/36** $^{(2009.01)}$

(52) Cooperative Patent Classification (CPC):
**H04W 52/14; H04W 52/36**

(86) International application number:
**PCT/CN2023/108009**

(87) International publication number:
**WO 2025/015537 (23.01.2025 Gazette 2025/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Beijing Xiaomi Mobile Software Co., Ltd.**
**Beijing 100085 (CN)**

(72) Inventor: **GAO, Xueyuan**
**Beijing 100085 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **COMMUNICATION METHOD AND APPARATUS, COMMUNICATION DEVICE, AND COMMUNICATION SYSTEM**

(57)    The present disclosure relates to a communication method and apparatus, a communication device, and a communication system. The communication method comprises: sending first information, the first information being used to represent a power level, and the first information being sent by means of a power headroom report (PHR). The present disclosure helps to implement better scheduling of a network, and is more suitable for service sending requirement scheduling.

S3201, sending first information
(for example, indicating a power class)

FIG. 3b

EP 4 750 174 A1

**Description**

**TECHNICAL FIELD**

The present disclosure relates to a field of wireless communication technologies, and specifically to a communication method and an apparatus, a communication device, and a communication system.

**BACKGROUND**

When participating in uplink (UL) transmission in a wireless communication network, a terminal needs to comply with regulatory constraints. For example, one regulation requires that radio frequency (RF) exposure during the UL transmission by the terminal should not exceed an RF exposure limit. Based on this, the terminal often needs to adjust a transmission power when actually performing the UL transmission.

**SUMMARY**

Adjustment of a transmission power by a terminal during uplink (UL) transmission affects scheduling of a UL by a network device.

The embodiments of the present disclosure provide a communication method and an apparatus, a communication device, and a communication system.

According to a first aspect of the embodiments of the present disclosure, a communication method is provided, including: sending first information, in which the first information indicates a power class and is sent via a power headroom report (PHR).

According to a second aspect of the embodiments of the present disclosure, a communication method is provided, including: receiving first information, in which the first information indicates a power class and is sent via a PHR.

According to a third aspect of the embodiments of the present disclosure, a communication method is provided, including: sending, by a terminal, first information to a network device, in which the first information indicates a power class and is sent via a PHR.

According to a fourth aspect of the embodiments of the present disclosure, a terminal is provided, including: a transceiver module, configured to send first information, in which the first information indicates a power class and is sent via a PHR.

According to a fifth aspect of the embodiments of the present disclosure, a network device is provided, including: a transceiver module, configured to receive first information, in which the first information indicates a power class and is sent via a PHR.

According to a sixth aspect of the embodiments of the present disclosure, a terminal is provided, including: one or more processors, in which the processor is configured to invoke instructions to cause the terminal to implement the communication method according to the first aspect.

According to a seventh aspect of the embodiments of the present disclosure, a network device is provided, including: one or more processors, in which the processor is configured to invoke instructions to cause the network device to implement the communication method according to the second aspect.

According to an eighth aspect of the embodiments of the present disclosure, a communication system is provided, including a terminal and a network device, in which the terminal is configured to implement the communication method according to the first aspect, and the network device is configured to implement the communication method according to the second aspect.

According to a ninth aspect of the embodiments of the present disclosure, a storage medium for storing instructions is provided. When the instructions are run on a communication device, the communication device is caused to implement the communication method according to any one of the first aspect and the second aspect.

The solution provided by the embodiments of the present disclosure is beneficial for a network to achieve better scheduling, and it is more suitable for scheduling based on service transmission requirements.

**BRIEF DESCRIPTION OF THE DRAWINGS**

In order to more clearly illustrate the technical solution in the embodiments of the disclosure, the accompanying drawings to be used in the embodiments of the disclosure will be described below. The following accompanying drawings are only part embodiments of the present disclosure, and do not constitute a limitation on the protection scope of the present disclosure.

FIG. 1a is a schematic diagram of an architecture of a communication system according to an embodiment of the present disclosure.

FIG. 1b is a schematic diagram of cumulative transmission power control of a terminal according to an embodiment of the present disclosure.

FIG. 1c is a schematic diagram of cumulative transmission power control of a terminal according to an embodiment of the present disclosure.

FIG. 1d is a schematic diagram of cumulative transmission power control of a terminal according to an embodiment of the present disclosure.

FIG. 1e is a schematic diagram of a PHR configuration format for a single-carrier according to an embodiment of the present disclosure.

FIG. 1f is a schematic diagram of a PHR configuration format for a multiple-carrier according to an embodiment of the present disclosure.

FIG. 2 is a schematic diagram of an interaction of a communication method according to an embodiment of the present disclosure.

FIG. 3a is a flowchart of a communication method according to an embodiment of the present disclosure.

FIG. 3b is a flowchart of a communication method according to an embodiment of the present disclosure.

FIG. 4a is a flowchart of a communication method according to an embodiment of the present disclosure.

FIG. 4b is a flowchart of a communication method according to an embodiment of the present disclosure.

FIG. 5 is a flowchart of a communication method according to an embodiment of the present disclosure.

FIG. 6a is a schematic diagram of a terminal according to an embodiment of the present disclosure.

FIG. 6b is a schematic diagram of a network device according to an embodiment of the present disclosure.

FIG. 7a is a block diagram of a communication device according to an exemplary embodiment.

FIG. 7b is a block diagram of a chip according to an exemplary embodiment.

## DETAILED DESCRIPTION

The embodiments of the present disclosure provide a communication method and an apparatus, a communication device, and a communication system.

According to a first aspect, the embodiments of the present disclosure provide a communication method, including: sending first information, in which the first information indicates a power class and is sent via a power headroom report (PHR).

In the above embodiments, by sending the first information, the terminal enables a network to determine a power class of a terminal, which facilitates the network in achieving better scheduling and is more suitable for scheduling based on service transmission requirements.

In some embodiments in combination with the first aspect, in some embodiments, sending the first information includes: sending the first information in a case that at least one of following conditions is satisfied: the power class being reduced to a first power class, in which the first power class is lower than a second power class, and the second power class is a power class defined by a terminal and/or a power class initially reported by the terminal; or the power class being recovered.

In the above embodiments, situations of sending the power class under different conditions are provided to ensure that the network device may better perform communication scheduling under the different conditions.

In some embodiments in combination with the first aspect, in some embodiments, the power class being reduced is determined by: determining the power class is reduced in a case that an UL duty cycle corresponding to the terminal sending a physical uplink shared channel (PUSCH) is greater than a first threshold corresponding to a current power class, in which different power classes correspond to different first thresholds.

In the above embodiments, the terminal may determine that the power class is reduced for different situations, so that the terminal may trigger sending the first information based on the power class being reduced, to ensure optimal network scheduling in most cases.

In some embodiments in combination with the first aspect, the power class being recovered is determined by at least one of: determining that the power class is recovered in a case that the terminal starts a next evaluation period; or determining that the power class is recovered in a case that an UL duty cycle corresponding to the terminal sending a PUSCH is less than or equal to a second threshold.

In the above embodiments, the terminal may determine that the power class is recovered for different situations, so that the terminal may trigger sending the first information based on power class being reduced, to ensure optimal network scheduling in most cases.

In some embodiments in combination with the first aspect, determining that the power class is recovered in a case that the terminal starts the next evaluation period includes: the power class being recovered to the power class defined by the terminal and/or the power class initially reported by the terminal.

In the above embodiments, the terminal starts the next evaluation period, the power class is recovered to the power class defined by the terminal and/or the power class initially reported by the terminal, so that UL transmission in a new evaluation period may be based on the power class defined by the terminal and/or the power class initially reported by the terminal, which improves communication efficiency.

In some embodiments in combination with the first aspect, the first information includes at least one of: a first power class to which the power class is reduced; a third power class to which the power class is recovered; a power class variation of the terminal; an evaluation period of the terminal; or a first duration corresponding to at least one of a first power class or a third power class, in which the first duration indicates an estimated duration for at least one of the first power class or the third power class.

In the above embodiments, the first information sent by the terminal may include at least one piece of a plurality of pieces of first information, which allows flexible adjustment of a quantity and content of reported information, thus achieving better network scheduling while saving resources as much as possible.

In some embodiments in combination with the first aspect, the evaluation period includes a first start time, and the first start time is a start time of the evaluation period; and in which the first start time includes at least one of: a time corresponding to a system frame number (SFN) being 0; or a time obtained by applying an offset to an SFN being 0.

In the above embodiments, the start time of the evaluation period reported by the terminal may be determined in different ways, and different determination methods may ensure that the terminal may flexibly report the start time of the evaluation period. This may make the start time of the evaluation period that is reported more accurate or efficient.

In some embodiments in combination with the first aspect, the evaluation period includes a first duration length, and the first duration length is a duration length of the evaluation period; and in which the first duration length is represented in at least one of following manners: the first duration length being represented based on a quantity of first granularities, in which the first granularity corresponds to a second duration length; the first duration length being represented based on a first value, in which the first value corresponds to a first duration interval, the first duration interval is a preset duration range of the evaluation period, and the first duration length falls within the preset duration range and is represented by the preset duration range; or the first duration length being represented based on a second value, in which the second value corresponds to a preset duration length of the evaluation period.

In the above embodiments, the duration length of the evaluation period reported by the terminal may be determined in different ways, and different determination methods may ensure that the terminal may flexibly report the duration length of the evaluation period. This may make the duration length of the evaluation period that is reported more accurate or efficient.

In some embodiments in combination with the first aspect, the first duration includes a second start time; and in which the second start time includes at least one of: a sending time of the PHR; a first start time corresponding to the evaluation period; a time determined based on a first reference point and a quantity of second granularities, in which the first reference point is a time corresponding to an SFN being 0, and the second granularity corresponds to a third duration length; a time determined based on a second reference point, in which the second reference point is a reference point adjacent to a sending time of the PHR, among reference points obtained by dividing the evaluation period based on a third granularity, and the third granularity corresponds to a fourth duration length; or a sending time of the PUSCH.

In the above embodiments, a start time of the first duration reported by the terminal may be determined in different ways, and different determination methods may ensure that the terminal may flexibly report the start time of the first duration. This may make the start time of the first duration that is reported more accurate or efficient.

In some embodiments in combination with the first aspect, the second start time includes a time determined based on the first reference point and the quantity of second granularities; and the method further includes: sending second information, in which the second information indicates the quantity of second granularities.

In the above embodiments, the terminal may report the quantity of second granularities, so that the network may determine a method for determining the second start time, thus achieving better scheduling and improving the communication efficiency.

In some embodiments in combination with the first aspect, the first duration includes a fifth duration length; and in which the fifth duration length is represented in at least one of the following manners: the fifth duration length being represented based on a quantity of third granularities, in which the third granularity corresponds to a sixth duration length; the fifth duration length being represented based on a third value, in which the third value corresponds to a second duration interval, the second duration interval is a preset duration range for the power class, and the fifth duration length falls within the preset duration range and is represented by the preset duration range; or the fifth duration length being represented based on a fourth value, in which the fourth value corresponds to a preset duration length for the power class.

In the above embodiments, the duration length of the first duration reported by the terminal may be determined in different ways, and different determination methods may ensure that the terminal may flexibly report the duration length of the first duration. This may make the duration length of the first duration that is reported more accurate or efficient.

In some embodiments in combination with the first aspect, the first information includes a maximum output power (MOP) of the terminal, the MOP being determined based on a first output power, a power variation, and maximum power reduction (MPR), in which the first output power is determined based on the second power class, and the power variation and the MPR are determined based on the second power class, or the power variation and the MPR are determined based on the third power class.

In the above embodiments, the terminal determines the MOP in different ways to adapt to different situations and improve the communication efficiency.

According to a second aspect, the embodiments of the present disclosure provide a communication method, including: receiving first information, in which the first information indicates a power class and is sent via a PHR.

In some embodiments in combination with the second aspect, the first information is generated in a case that at least one of the following conditions is satisfied: the power class is reduced to a first power class, in which the first power class is lower than a second power class, and the second power class is a power class defined by a terminal and/or a power class initially reported by the terminal; or the power class is recovered.

In some embodiments in combination with the second aspect, the power class being reduced is determined by: determining the power class is reduced in a case that an UL duty cycle corresponding to the terminal sending a PUSCH is greater than a first threshold corresponding to a current power class, in which different power classes correspond to different first thresholds.

In some embodiments in combination with the second aspect, the power class being recovered is determined by at least one of: determining that the power class being recovered in a case that the terminal starts a next evaluation period; or determining that the power class being recovered in a case that an UL duty cycle corresponding to the terminal sending a PUSCH is less than or equal to a second threshold.

In some embodiments in combination with the second aspect, determining that the power class being recovered in a case that the terminal starts the next evaluation period includes: the power class being recovered to the power class defined by the terminal and/or the power class initially reported by the terminal.

In some embodiments in combination with the second aspect, the first information includes at least one of: a first power class to which the power class is reduced; a third power class to which the power class is recovered; a power class variation of a terminal; an evaluation period of a terminal; or a first duration corresponding to at least one of a first power class or a third power class, in which the first duration indicates an estimated duration for at least one of the first power class or the third power class.

In some embodiments in combination with the second aspect, the evaluation period includes a first start time, the first start time being a start time of the evaluation period; and in which the first start time includes at least one of: a time corresponding to an SFN being 0; or a time obtained by applying an offset to an SFN being 0.

In some embodiments in combination with the second aspect, the evaluation period includes a first duration length, and the first duration length is a duration length of the evaluation period; and in which the first duration length is represented in at least one of following manners: the first duration length being represented based on a quantity of first granularities, in which the first granularity corresponds to a second duration length; the first duration length being represented based on a first value, in which the first value corresponds to a first duration interval, the first duration interval is a preset duration range of the evaluation period, and the first duration length falls within the preset duration range and is represented by the preset duration range; or the first duration length being represented based on a second value, in which the second value corresponds to a preset duration length of the evaluation period.

In some embodiments in combination with the second aspect, the first duration includes a second start time; and in which the second start time includes at least one of: a sending time of the PHR; a first start time corresponding to the evaluation period; a time determined based on a first reference point and a quantity of second granularities, in which the first reference point is a time corresponding to an SFN being 0, and the second granularity corresponds to a third duration length; a time determined based on a second reference point, in which the second reference point is a reference point adjacent to a sending time of the PHR, among reference points obtained by dividing the evaluation period based on a third granularity, and the third granularity corresponds to a fourth duration length; or a sending time of the PUSCH.

In some embodiments in combination with the second aspect, the second start time includes a time determined based on the first reference point and the quantity of second granularities; and the method further includes: receiving second information, in which the second information indicates the quantity of second granularities.

In some embodiments in combination with the second aspect, in some embodiments, the first duration includes a fifth duration length; and in which the fifth duration length is represented in at least one of the following manners: the fifth duration length being represented based on a quantity of third granularities, in which the third granularity corresponds to a sixth duration length; the fifth duration length being represented based on a third value, in which different third values correspond to different second duration intervals, the second duration intervals are intervals within which preset duration ranges corresponding to the power class fall; or the fifth duration length being represented based on a fourth value, in which the fourth value corresponds to a preset duration length for the power class.

In some embodiments in combination with the second aspect, the first information includes an MOP of the terminal, the MOP is determined based on a first output power, a power variation, and MPR, in which the first output power is determined based on the second power class, and the power variation and the MPR are determined based on the second power class, or the power variation and the MPR are determined based on the third power class.

According to a third aspect, the embodiments of the present disclosure provide a communication method, including: sending, by a terminal, first information to a network device, in which the first information indicates a power class and is sent via a PHR.

According to a fourth aspect, the embodiments of the present disclosure provide a terminal, including a transceiver module. The terminal is configured to implement the first aspect and optional implementations of the first aspect.

According to a fifth aspect, the embodiments of the present disclosure provide a network device, including a transceiver module. The network device is configured to implement the second aspect and optional implementations of the second aspect.

According to a sixth aspect, the embodiments of the present disclosure provide a terminal, including one or more processors. The terminal is configured to implement the first aspect and optional implementations of the first aspect.

According to a seventh aspect, the embodiments of the present disclosure provide a network device, including one or more processors. The network device is configured to implement the second aspect and optional implementations of the second aspect.

According to an eighth aspect, the embodiments of the present disclosure provide a communication system. The communication system includes a terminal and a network device. The terminal is configured to implement the methods described in the first aspect and the third aspect, and the methods of optional implementations of the first aspect and the third aspect. The network device is configured to implement the methods described in the second aspect and the third aspect, and the methods of optional implementations of the second aspect and the third aspect.

According to a ninth aspect, the embodiments of the present disclosure provide a storage medium storing instructions. When the instructions are running on a communication device, the communication device is caused to implement the methods described in the first aspect and the third aspect, and the methods of optional implementations of the second aspect and the third aspect.

According to a tenth aspect, the embodiments of the present disclosure provide a program product. When the program product is executed by a communication device, the communication device is caused to implement the methods described in the first aspect and the third aspect, and the methods of optional implementations of the second aspect and the third aspect.

According to an eleventh aspect, the embodiments of the present disclosure provide a computer program. When the computer program is run on a computer, the computer is caused to implement the methods described in the first aspect and the third aspect, and the methods of optional implementations of the second aspect and the third aspect.

It may be understood that the terminal, the network device, the communication device, the communication system, the storage medium, the program product, and the computer program are all used to implement the methods provided in the embodiments of the present disclosure. Therefore, beneficial effects that they may achieve may be referred to the beneficial effects in the corresponding methods, which will not be repeated here.

The embodiments of the present disclosure provide communication. In some embodiments, terms such as "communication method" and "information processing method" may be used interchangeably, terms such as "communication apparatus" and "information processing apparatus" may be used interchangeably, and terms such as "information processing system" and "communication system" may be used interchangeably.

The embodiments of the present disclosure are not exhaustive and only serve as illustrations of some embodiments, but not as specific limitations to the protection scope of the present disclosure. When there is no contradiction, each step in an embodiment may be implemented as an independent embodiment, and steps may be arbitrarily combined. For example, a solution obtained by removing some steps from an embodiment may also be implemented as an independent embodiment. A sequence of steps in an embodiment may be arbitrarily exchanged. In addition, optional implementations in an embodiment may be arbitrarily combined. Furthermore, different embodiments may be arbitrarily combined. For example, part of or all steps of different embodiments may be arbitrarily combined, and an embodiment may be arbitrarily combined with optional implementations of other embodiments.

In various embodiments of the present disclosure, unless otherwise specified and in case of logical inconsistency, terms and/or descriptions are consistent in all embodiments and reference may be made to each other. Technical features from different embodiments may be combined to form a new embodiment based on their inherent logical relationships.

The terms used in the embodiments of the present disclosure are for a purpose of describing specific embodiments only and are not intended to limit the present disclosure.

In the embodiments of the present disclosure, unless otherwise specified, elements expressed in a singular form, such as "a", "an", "the", "said", "above", "aforementioned", "this" etc. may mean "one and only one" or may mean "one or more", "at least one", etc. For example, when articles such as "a", "an", or "the" are used in translation, the noun following the article may be understood in the singular form or in the plural form.

In the embodiments of the present disclosure, "a plurality of" means two or more.

In some embodiments, terms such as "at least one of", "one or more", "a plurality of", "multiple", etc. may be used interchangeably.

In some embodiments, expressions such as "at least one of A or B", "A and/or B", "at least one of A or B", "in a case A, in another case B", and "in response to a case A, in response to another case B" in the present disclosure, depending on context, may include at least one of following solutions: performing A in some implementations (performing A independently of B); performing B in some implementations (performing B independently of A); selecting one of A or B for execution in some implementations (selectively performing A or B); and performing A and B in some implementations (performing both A and B). The similar principle applies when there are more parts such as A, B, C, etc.

In some embodiments, expressions such as "A or B", depending on context, may include following technical solutions: performing A in some implementations (performing A independently of B); performing B in some implementations (performing B independently of A); and selecting one of A or B for execution in some implementations (selectively performing A or B). The similar principle applies when there are more parts such as A, B, C, etc.

The terms such as "first" and "second" added in front of other words in the embodiments of the present disclosure are used solely to distinguish different described objects and do not limit a position, a sequence, a priority, a quantity, or content of the described objects. For a statement regarding the described object, reference may be made to claims or descriptions in the context of embodiments and should not constitute other restrictions due to the use of the above terms in front of other words. For example, if the described object is "field", ordinal numbers before the "field" in "first field" and "second field" do not limit a position or a sequence between fields. "First" and "second" do not limit whether "fields" they modified are in a same message, nor do an order of the "first field" and the "second field." For another example, if the described object is "level", ordinal numbers before the "level" in "first level" and "second level" do not limit a priority between levels. Furthermore, a quantity of described objects is not limited by the ordinal numbers, which may be one or more. Taking "first apparatus" as an example, there may be one or more "apparatus". In addition, objects modified by different words may be the same or different. For example, if the described object is an "apparatus", "first apparatus" and "second apparatus" may be a same apparatus or different apparatuses, and their types may be the same or different. Similarly, if the described object is "information", "first information" and "second information" may be same information or different information, and their content may be the same or different.

In some embodiments, "including A", "containing A", "configured to indicate A", or "carrying A" may be interpreted as directly carrying A or indirectly indicating A.

In some embodiments, terms such as "in response to...", "in response to determining...", "in a case that...", "when...", "if..." etc. may be used interchangeably.

In some embodiments, the terms such as "greater than", "greater than or equal to", "not less than", "more than", "more than or equal to", "no less than", "higher than", "higher than or equal to", "not lower than", "above", etc. may be used interchangeably. The terms such as "less than", "less than or equal to", "not greater than", "fewer than", "fewer than or equal to", "no more than", "lower than", "lower than or equal to", "not higher than", "below" etc. may also be used interchangeably.

In some embodiments, "apparatus" may be interpreted as either physical or virtual, and their names are not limited to those mentioned in the embodiments. The terms such as "apparatus", "equipment", "device", "circuit", "network element", "node", "function", "unit", "section", "system", "network", "chip", "chip system", "entity", "subject", etc. may be used interchangeably.

In some embodiments, "network" may be interpreted as a device included in a network (e.g., an access network device, a core network device, etc.).

In some embodiments, terms such as "access network device (AN device)", "radio access network device (RAN device)", "base station (BS)", "radio base station", "fixed station", "node", "access point (AP)", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", etc. may be used interchangeably.

In some embodiments, terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc. may be used interchangeably.

In some embodiments, the access network device, the core network device, or the network device may be replaced with a terminal. For example, the embodiments of the present disclosure may also be applied to a structure where communication between the access network device, the core network device, or the network device and the terminal is replaced with communication between a plurality of terminals (e.g., device-to-device (D2D), vehicle-to-everything (V2X), etc.). In this case, a structure may also be adopted where the terminal has all or part of functions of the access network device. In addition, terms such as "uplink" and "downlink" may also be replaced with terms corresponding to inter-terminal communication (e.g., "sidelink"). For example, a UL channel or a DL channel may be replaced with a sidelink channel, and UL or DL may be replaced with sidelink.

In some embodiments, the terminal may be replaced with an access network device, a core network device, or a network device. In this case, it may also be configured such that the access network device, the core network device, or the network device has all or part of functions of the terminal.

In some embodiments, obtaining data, information, etc. shall comply with laws and regulations of a country where it is located.

In some embodiments, data, information, etc. may be obtained after agreed by a user.

In addition, each element, each row, or each column in tables of the embodiments of the present disclosure may be implemented as an independent embodiment. Any combination of elements, rows, or columns may also be implemented as an independent embodiment.

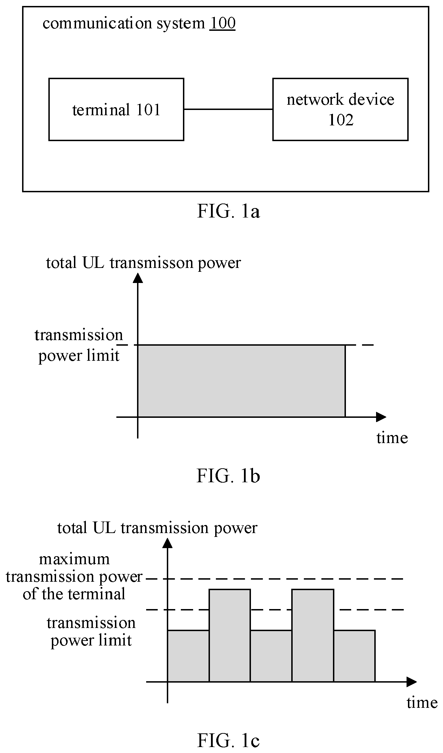

**FIG.** 1a is a schematic diagram of an architecture of a communication system according to an embodiment of the present disclosure.

As shown in FIG. 1a, a communication system 100 includes a terminal 101 and a network device 102.

**In** some embodiments, the terminal 101 includes, for example, at least one of a mobile phone, a wearable device, an Internet of Things device, or a car, a smart car, and a Pad that are with a communication function, a computer with a wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, etc., which is not limited herein.

In some embodiments, the network device 102 may include at least one of an access network device or a core network device.

In some embodiments, the terminal 101 includes, for example, at least one of a mobile phone, a wearable device, an IOT device, or a car, a smart car, a pad that are with a communication function, a computer with a wireless transceiver function, a VR terminal 101, an AR terminal 101, a wireless terminal 101 in industrial control, a wireless terminal 101 in self-driving, a wireless terminal 101 in remote medical surgery, a wireless terminal 101 in smart grid, a wireless terminal 101 in transportation safety, a wireless terminal 101 in smart city, or a wireless terminal 101 in smart home, but is not limited thereto.

In some embodiments, the access network device may be, for example, a node or device that connects the terminal 101 to a wireless network. The access network device may include at least one of an evolved NodeB (eNB) in a 5th generation (5G) communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a baseband unit (BBU), a mobile switching center, a base station in a 6th generation (6G) communication system, an Open RAN, a Cloud RAN, a base station in another communication system, an access node in a wireless fidelity (WiFi) system, which is not limited herein.

In some embodiments, the technical solution of the present disclosure may be applied to an architecture of the Open RAN. In this case, an interface between access network devices or within the access network device in the embodiments of the present disclosure may become an internal interface of the Open RAN. Processes and information interaction may be implemented via software or programs.

In some embodiments, the access network device may be composed of a central unit (CU) and distributed units (DUs). The CU may also be referred to as a control unit. The use of a CU-DU structure allows to divide a protocol layer of the access network device, such that part of the protocol layer functions are placed in the CU for centralized control, and part or all of remaining protocol layer functions are distributed in the DUs, and the DUs are centrally controlled by the CU, which is not limited herein.

In some embodiments, the core network device may be a single device including one or more network elements, or may be a plurality of devices or device groups including one or more network elements, and may also be physical. A core network includes, for example, at least one of an evolved packet core (EPC), a 5G core network (5GCN), or a next generation core (NGC).

It may be understood that the communication system in the embodiments of the present disclosure is intended to illustrate the technical solutions in the embodiments of the present disclosure more clearly and does not constitute a limitation of the technical solutions in the embodiments of the present disclosure. Those skilled in the art may know that the technical solutions in the embodiments of the present disclosure are equally applicable to similar technical problems, with the evolution of system architecture and the emergence of a new service scene.

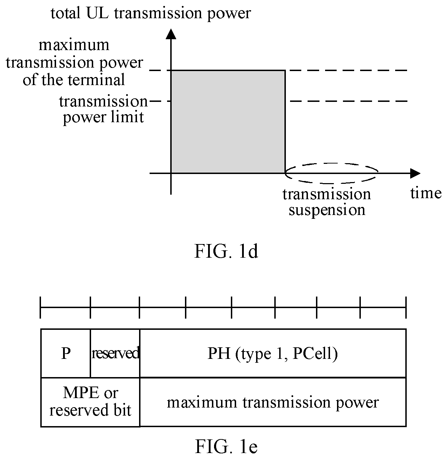

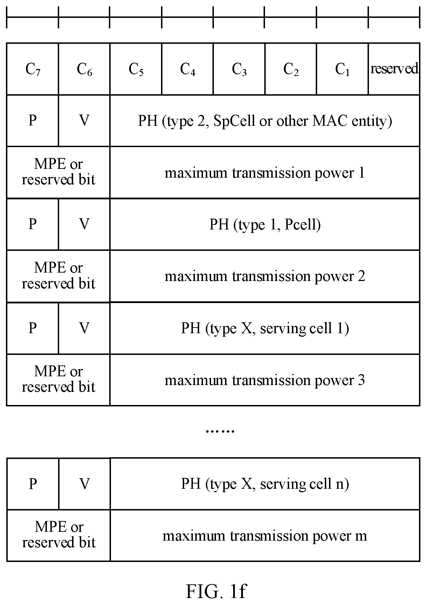

Following embodiments of the present disclosure may be applied to the communication system 100 shown in FIG. 1a, or to some entities, which are not limited to this. Entities in FIG. 1a are illustrative. The communication system may include all or part of the entities in FIG. 1a or may include other entities not shown in FIG. 1. The entities may be in any number and in any form. The entities may be either physical or virtual. Connections between the entities are illustrative. The entities may be unconnected or may be connected. The connections may be in any manner, for example, the connections may be directly or indirectly or may be wired or wireless.

The embodiments of the present disclosure may be applied to long term evolution (LTE), LTE-Advanced (LTE-A), LTE-Beyond (LTE-B), SUPER 3th generation (3G), IMT-Advanced, 4th generation mobile communication system (4G), 5G mobile communication system, 5G new radio (NR), future radio access (FRA), new-radio access technology (RAT), NR, new radio access (NX), future generation radio access (FX), global system for mobile communications (GSM®), CDMA2000, ultra mobile broadband (UMB), IEEE 802.11 (Wi-Fi®), IEEE 802.16 (WiMAX®), IEEE 802.20, ultra-wideband (UWB), Bluetooth®, public land mobile network (PLMN), device-to-device (D2D) system, machine to machine (M2M) system, internet of things (IoT) system, vehicle-to-everything (V2X), systems using other communication methods, next-generation systems based on them, etc. In addition, a combination of a plurality of systems (e.g., a combination of LTE or LTE-A with 5G) may be applied.

In some embodiments, it may be enhanced that the terminal achieves higher transmission power under carrier aggregation (CA)/dual connectivity (DC). For a terminal equipped with dual power amplifiers (PAs), the CA/DC may be supported. Taking a power class (PC) defined by the terminal as PC2 as an example, PA capabilities of the terminal on different bands may be different. For example, Table 1 shows configurations of the terminal power.

Table 1

|  | UE power class | network carrier X power class | network carrier Y power class |
|---|---|---|---|
| combination a | 26 dBm | 23 dBm | 23 dBm |
| combination b | 26 dBm | 23 dBm | 26 dBm |
| combination c | 26 dBm | 26 dBm | 23 dBm |
| combination d | 26 dBm | 26 dBm | 26 dBm |

As shown in Table 1, carrier X and carrier Y are used to represent different bands. It may be seen from Table 1 that if a power class limit of the terminal on one band is 23 dBm, and a power class limit on another band is also 23 dBm, a power class of the terminal is limited to a maximum of 26 dBm. As for combination b and combination c, when the power class limit of the terminal on one band is 23 dBm and the power class limit on another band is 26 dBm, due to relevant protocol regulations, the power class of the terminal is limited to a maximum of 26 dBm. As for combination d, it is also limited to a maximum of 26 dBm due to the relevant protocol regulations. That is to say, a maximum transmission power of the terminal may be limited by the terminal power class specified in a protocol. In an R17 work item (WI) on increasing a power upper limit for a CA/DC terminal, for a band combination where one band supports a power class up to PC3 (23 dBm) and another band supports a power class up to PC2 (26 dBm), it may be assumed that a total power associated with the band combination is a sum of power classes.

In some embodiments, the power class of the terminal is specified. Therefore, in some cases, a new capability signaling is introduced for each band combination. That is, for this relaxed signaling support, a new MOP capability signaling is introduced, for example, the signaling may be HigherPowerLimitCADC. The signaling may be applicable to a terminal that supports PC3 for a power class for transmission in one band and PC2 for a power class for transmission in another band in a CA scenario. The band may be, for example, a band using time division duplexing (TDD) or frequency division duplexing (FDD). The terminal may use a new MOP capability and use full power from two power PAs, corresponding to a maximum composite power of 27.8 dBm. In contrast, an R16 terminal is limited to PC2 in a CA/DC configuration.

In some embodiments, a key to achieving simultaneous transmission across a plurality of bands is that the terminal needs to comply with corresponding regulatory constraints when participating in UL transmission. The regulatory constraints on total RF exposure experienced by a user require the terminal to determine a safe transmission power level for each band, i.e., an RF exposure level. When the terminal approaches or exceeds an allowed RF exposure level, the terminal needs to recalculate safe transmission power for each band in use, leading to adjustments in UL transmission power. In some cases, the terminal may set a fixed power limit so that the terminal never exceeds a limit of the RF exposure level.

However, since change in transmission power of the terminal is transparent to the network device, that is, the network device does not know the reason why the transmission power of the terminal changes, these affect a perception of a link quality by the network device, affect link adaptation, and subsequently may lead to fluctuations in UL throughput. Obviously, allowing the network device to better understand these constraints and their impacts on a behavior of the terminal may help the network device adopt a more detailed and accurate scheduling decision.

In some embodiments, depending on different combinations of bands, two types of RF exposure level limit metrics may be used. For example, one type may use a specific absorption rate (SAR) as a metric, which is mainly applicable to bands below 6 GHz, such as frequency range (FR) 1. Another type may use measured power density (PD) and calculate maximum power exposure (MPE) as a metric, which is mainly used for millimeter-wave bands, such as FR2. The above metrics all use a time-averaging method to limit RF exposure. That is, when the above metrics are used for measurement, average RF exposure over a specific event window must remain below a specific threshold. However, it may be understood that the protocol regulates the average RF exposure rather than instantaneous RF exposure, although there may be some exceptions in certain regions. When implementing high-power transmission at the terminal, a time-averaged nature of the above constraints is a rather crucial aspect. This indicates that although the terminal may not send at full power on all bands all the time, the terminal may transmit at higher transmission power for a short time period.

When performing the UL transmission, the terminal may, in an initial access phase, determine a maximum UL duty cycle (i.e., max UL duty cycle) that the terminal may support within an UL evaluation period based on SAR/MPE requirements, and report maxUplinkDutyCycle to the network device. After a communication connection with the network device is established, the network device configures the terminal based on the maximum UL duty cycle reported by the terminal, i.e., with a maximum UL duty cycle value used in subsequent transmission, denoted as maxULdutycycle or maxUplinkDutyCycle. The terminal controls actual UL transmission according to a transmission symbol proportion corresponding to a maximum UL duty cycle configured by the network device within the UL evaluation period. However, adjustments caused thereby are transparent to the network device. Meanwhile, in certain countries or regions, due to national/regional regulations that may specify mandatory radiation exposure requirements like SAR/MPE for the terminal in different bands, the terminal ensures requirements for sending a UL duty cycle via actual transmission within the UL evaluation period to meet the SAR/MPE requirements.

For example, FIG. 1b is a schematic diagram of cumulative transmission power control of a terminal. It may be seen that a gray area shows that total transmission power of the terminal within one UL duty cycle needs to satisfy a transmission power limit. It may be understood that the transmission power limit is a power limit determined on a carrier/cell to meet the SAR/MPE requirements, for example, 23 dBm. It may be understood that the power limit may be an SAR limit or an MPE limit. In FIG. 1b, the terminal maintains that average transmission power over the UL duty cycle satisfies the transmission power limit.

In fact, in some sending slots, the transmission power of the terminal may be lower than the transmission power limit, while in other sending slots, the transmission power of the terminal may be higher than the transmission power limit, as shown in FIG. 1c. As may be seen from FIG. 1c, the terminal only needs to ensure that average transmission power over UL transmission symbols corresponding to an actual UL duty cycle within the UL evaluation period does not exceed the transmission power limit. Although instantaneous transmission power in a certain slot may exceed the transmission power limit, it still needs to meet requirements of the maximum transmission power of the terminal, i.e., may not exceed the maximum transmission power of the terminal.

In some cases, as shown in FIG. 1d, the terminal may use the maximum transmission power to send UL data in some slots. In order to ensure that the average transmission power over the UL transmission symbols corresponding to the actual UL duty cycle within the UL evaluation period meets requirements of the transmission power limit, the terminal is unable to send the UL data in a subsequent sending time, i.e., the terminal suspends transmission during this period. Even if the terminal may have a need to send the data during this period, the terminal may not continue to send data.

In some embodiments, the terminal may use maxUplinkDutyCycle to avoid non-CA SAR/MPE issues for a high power user equipment (HPUE). For CA cases, this issue may be avoided by a UE implementation.

In some embodiments, due to high-order modulation and a transmission bandwidth configuration, the terminal is allowed to reduce the maximum transmission power. For example, for terminal PC2, Table 2 defines allowed MPR for a channel bandwidth meeting following two criteria; and for PC3, Table 3 defines allowed MPR for the channel bandwidth meeting the following two criteria.

Table 2

| Modulation | | MPR (dB) | | |
| --- | --- | --- | --- | --- |
| | | Edge resource block (RB) allocations | Outer RB allocations | Inner RB allocations |
| DFT-s-OFDM | Pi/2 BPSK | $\leq 3.5$ | $\leq 0.5$ | 0 |
| | QPSK | $\leq 3.5$ | $\leq 1$ | 0 |
| | 16 QAM | $\leq 3.5$ | $\leq 2$ | $\leq 1$ |
| | 64 QAM | $\leq 3.5$ | $\leq 2.5$ | |
| | 256 QAM | $\leq 4.5$ | | |
| CP-OFDM | QPSK | $\leq 3.5$ | $\leq 3$ | $\leq 1.5$ |
| | 16 QAM | $\leq 3.5$ | $\leq 3$ | $\leq 2$ |
| | 64 QAM | $\leq 3.5$ | | |
| | 256 QAM | $\leq 6.5$ | | |

Table 3

| Modulation | | MPR (dB) | | |
|---|---|---|---|---|
| | | Edge RB allocations | Outer RB allocations | Inner RB allocations |
| DFT-s-OFD M | Pi/2 BPSK | ≤ 3.5[1] | ≤ 1.2[1] | ≤ 0.2[1] |
| | | ≤ 0.5[2] | ≤ 0.5[2] | 0[2] |
| | QPSK | ≤ 1 | | 0 |
| | 16 QAM | ≤ 2 | | ≤ 1 |
| | 64 QAM | ≤ 2.5 | | |
| | 256 QAM | ≤ 4.5 | | |
| CP-OFD M | QPSK | ≤ 3 | | ≤ 1.5 |
| | 16 QAM | ≤ 3 | | ≤ 2 |
| | 64 QAM | ≤ 3.5 | | |
| | 256 QAM | ≤ 6.5 | | |

Note 1: Applicable for a UE operating in a TDD mode with Pi/2-BPSK modulation and the UE indicates support UE capability powerBoostPi2BPSK, and if information element (IE) powerBoostPi2BPSK is set to 1, and 40 % or less slots in radio frame are used for UL transmission for bands n40, n41, n77, n78, and n79. The reference power of 0 dB MPR is 26 dBm.

Note 2: Applicable for a band other than n40, n41, n77, n78, and n79 with π/2-BPSK modulation, and IE power-BoostPi2BPSK is set to 0, and 40% or more slots in the radio frame slots are used for the UL transmission for bands n40, n41, n77, n78, and n79.

Pi in Table 2 and/or Table 3 may be $\pi$.

In some embodiments, additional emission requirements may be notified to the terminal via a network signaling. Each additional emission requirement is associated with a unique network signal (NS) value, which is indicated in a radio resource control (RRC) signaling by an NR band number of an applicable operating band and an association value indication in a field. For example, the NR band number of the applicable operating band and an association value in the field may be additional spectrum emission.

For example, to meet additional requirements, additional maximum power reduction (A-MPR) is allowed on an MOP specified in Table 2 and/or Table 3. Unless otherwise specified, total reduction of the maximum transmission power of the terminal is a maximum between the MPR and the A-MPR. For details of MPR, reference may be made to the description above.

In some embodiments, the terminal is allowed to set its configured MOP for a carrier of a serving cell in each slot, for example, set its configured MOP $P_{CMAX,f,c}$ for carrier f of serving cell c.

Optionally, a value of $P_{CMAX,f,c}$ is between $P_{CMAX\_L,f,c}$ and $P_{CMAX\_H,f,c}$, that is, $P_{CMAX\_L,f,c} \leq P_{CMAX,f,c} \leq P_{CMAX\_H,f,c}$. $P_{CMAX,f,c}$ is a maximum transmission power, $P_{CMAX\_L,f,c}$ is a lower limit value of the maximum transmission power, and $P_{CMAX\_H,f,c}$ is a upper limit value of the maximum transmission power.

Optionally, $P_{CMX\_L,f,c}$ is determined based on Formula 1:

$$P_{CMAX\ L,f,c} = MIN\left\{P_{EMAX,c} - \Delta T_{C,c}\left(P_{PowerClass} - \Delta P_{PowerClass}\right) - MAX\left(MAX\left(MPR_c + \Delta MPR_c, A - MPR_c\right) + \Delta T_{IB,c} + \Delta T_{C,c} + \Delta T_{RxSRS}, P - MPR_c\right)\right\}$$

Formula 1

**Where** f represents a carrier frequency, c represents a serving cell, $P_{EMAX,c}$ represents allowed maximum power configured by the network device, $P_{PowerClass}$ represents terminal-defined power without taking into account other tolerances, $\Delta P_{PowerClass}$ represents terminal MPR or a power reduction value configured based on a duty cycle to ensure RF radiation exposure, $MPR_c$ represents maximum power reduction amount caused by a modulation scheme and transmission bandwidth configuration factors, $A\text{-}MPR_c$ represents additional power reduction notified by a network signaling to ensure relevant RF radiation exposure requirements for different operating bands, $\Delta T_{IB,c}$ represents an additional power reduction value under multi-carrier, $\Delta T_{C,c}$ represents an additional power reduction value corresponding to transmission with a special edge configuration, $\Delta T_{RxSRS}$ represents a terminal power adjustment value related to sounding reference signal (SRS) antenna switching, and $P\text{-}MPR_c$ represents power management maximum power attenuation.

Optionally, $P_{CMAX\_n,f,c}$ is determined based on Formula 2:

$$P_{CMAX\_H,f,c} = MIN\left\{P_{EMAX,c}, P_{PowerClass} - \Delta P_{PowerClass}\right\} \quad \text{Formula 2}$$

In some embodiments, considering that actual UL transmission that is controlled by the terminal may change based on implementations of the terminal, and these operations are transparent to the network device. Therefore, the terminal may report an instantaneous transmission power of a PUSCH to the network device, for example, via a PHR. The PHR may include power headroom (PH), a maximum transmission power $P_{CMAX,f,c}$, and power management-maximum power reduction (P-MPR). The PH reflects an amount of additional transmission power that the terminal may deliver with reference to a current PUSCH power level, while $P_{CMAX,f,c}$ reflects maximum power the terminal may deliver under this condition. Currently, a protocol stipulates that the P-MPR is only reported for FR2 bands. It may be understood that the PHR provides an instantaneous snapshot of a set of parameters reported to the network device for specific PUSCH transmission.

For example, FIG. 1e shows a PHR configuration format for a currently specified single-carrier. Indication field P indicates whether MPE exists; a reserved bit may be denoted as R, and it may be understood that the reserved bit typically does not include any information and is mainly used to record corresponding newly added data when necessary. PH is the above PH. In a case of a single carrier, PH information corresponds to the PUSCH of the terminal, i.e., type 1. Meanwhile, PH is PH corresponding to a primary cell (PCell). The MPE or the reserved bit indicates that the field may be MPE-related information or may be a reserved bit. The MPE-related information is used to record the P-MPR in a case of FR2.

For another example, FIG. 1f shows a PHR configuration format in a multi-carrier condition. C1 to C7 may respectively indicates PHRs corresponding to different carriers. It may be understood that a multi-carrier PHR may be regarded as a combination of a plurality of single-carrier PHRs. Type 2 may correspond to a physical uplink control channel (PUCCH), and a special cell (SpCell) may include a PCell and a primary secondary cell (PSCell). The serving cell may be a PCell, a secondary cell (SCell), a PSCell, an SpCell, or the like.

In some embodiments, UL coverage has always been one of bottlenecks of system performance, which affects a signal quality and user experience. There is a strong demand for UL coverage enhancement (CE), including from operators. In an R18 CE study, enhancement in a power domain is an issue worth exploring, which has a most direct improvement effect on both coverage and spectral efficiency (SE).

In NR UL CA/DC, a maximum transmission power defined on a band combination (BC) is limited by a transmission power class for the terminal defined on the BC. RAN4 enhancement of R17 supports the HPUE to better use an independent PA of the terminal to achieve a higher transmission power, which mainly enhances a configuration of PC2+PC3.

When the terminal performs the actual UL transmission, an actual transmission power may be limited by SAR requirements in FR1 and MPE requirements in FR2. Transmission power adjustments based on the SAR/MPE requirements may also cause a significant fluctuation or interruption in the transmission power. Based on an RAN4 protocol, the terminal defines that such implementations are transparent to the network device. These power limitations, adjustments, and whether the HPUE may achieve high-power transmission have a significant impact on network device scheduling and directly affect a practical effect of R17 enhancement deployed and applied in the network device. Allowing the network device to obtain power-related information of the terminal and understand a corresponding behavior of the terminal may support the network device in making a better scheduling decision.

Obviously, how to enable the network device to obtain the power-related information of the terminal is a problem that needs to be solved.

Therefore, by sending the power class of the terminal, the present disclosure facilitates the network in achieving better scheduling and is more suitable for scheduling based on service transmission requirements. This further improves system throughput and user coverage, helps improve system efficiency, reduces invalid scheduling by the network device, and also helps save unnecessary power consumption for the terminal.

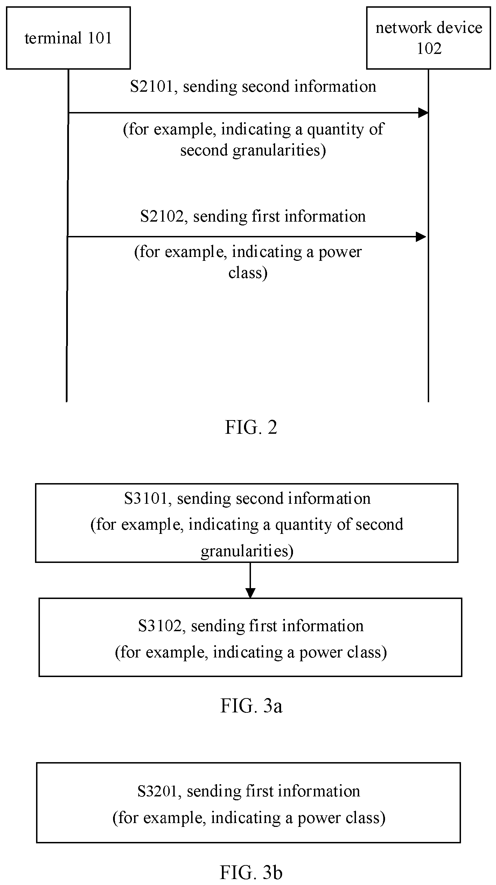

FIG. 2 is a schematic diagram of an interaction of a communication method according to the embodiments of the present disclosure. As shown in FIG. 2, the embodiments of the present disclosure relate to a communication method, applied to a communication system 100. The above method includes following steps at S2101 to S2102.

At S2101, the terminal 101 sends second information to the network device 102.

In some embodiments, the network device 102 receives the second information sent by the terminal 101.

In some embodiments, terms such as "send", "report", "deliver", "transmit", "bidirectional transmission", "send and/or receive" may be used interchangeably.

In some embodiments, "acquire", "obtain", "get", "receive", "transmit", "bidirectional transmission", "send and/or receive" may be used interchangeably, and they may be interpreted as receiving from another entity, obtaining from a protocol, obtaining from a higher layer, obtaining via processing by itself, autonomously implementing, and other meanings.

In some embodiments, the second information indicates a quantity of second granularities.

In some embodiments, the quantity of second granularities is used to determine a second start time of a first duration of the terminal.

For example, assuming the quantity of second granularities is M, and a third duration length corresponding to the second granularity is K. The second start time is a time obtained by applying an offset of M*K to an SFN being 0.

For example, when K corresponding to the second granularity is 100 ms, and the quantity M of second granularities is 1, the second start time is obtained by applying an offset of 100 ms to the SFN being 0. When the quantity M of second granularities is 2, the second start time is obtained by applying an offset of 200 ms to the SFN being 0.

It may be understood that in a case that the quantity of second granularities may also be 0, the second start time is a time corresponding to the SFN being 0.

In some embodiments, the second granularity may be equivalent to the third duration length. The second start time may be determined based on a reference point and a quantity of third duration lengths.

For example, assuming the quantity of third duration lengths is M, and a size of the third duration length is K. The second start time is a time obtained by applying an offset of M*K to the SFN being 0.

The first duration of the terminal indicates an estimated duration for at least one of a first power class or a third power class.

The first power class indicates a power class to which the power class is reduced by the terminal, and the third power class indicates a power class to which the power class is recovered by the terminal.

For example, when the power class being reduced by the terminal, the first duration may indicate an estimated duration for the first power class.

For another example, when the power class is recovered on the terminal, the first duration may indicate an estimated duration for the third power class.

In some embodiments, the terminal 101 transmits the second information to the network device, and the network device 102 may determine the quantity of second granularities based on the second information, thus determining a second start time of a duration of the power class after power class changes, so as to facilitate better network scheduling.

In some embodiments, a name of the second information is not limited, for example, it may be "granularity information", etc.

In some embodiments, names of information and other elements are not limited to the names recorded in the embodiments. Terms such as "information", "message", "signal", "signaling", "report", "configuration", "indication", "instruction", "command", "channel", "parameter", "domain", "field", "symbol", "codebook", "codeword", "codepoint", "bit", "data", "program", etc., may be used interchangeably.

In some embodiments, terms such as "certain", "preseted", "preset", "set", "indicated", "a/an", "any", "first", etc. may be used interchangeably. "certain A", "presetedA", "preset A", "set A", "indicated A", "a/an A", "any A", "first A" may be interpreted as A predefined in a protocol, etc., or as A obtained via setting, configuration, or indication, etc., or as a certain A, a/an A, any A, or a first A, etc., which is not limited thereto.

In some embodiments, terms such as "time instant", "time point", "time", "time position", etc. may be used interchangeably; and terms such as "period", "time interval", "time window", "window", "time", etc. may be used interchangeably.

At S2102, the terminal 101 sends first information to the network device 102.

In some embodiments, the network device 102 receives the first information sent by the terminal 101.

In some embodiments, the terminal 101 sends the first information via a PHR.

For example, the PHR includes the first information.

Optionally, in response to the power class being reduced, the terminal triggers the PHR.

Optionally, in response to the power class being recovered, the terminal triggers the PHR.

For example, the terminal triggering the PHR due to the power class being reduced may be that the terminal triggers the PHR after the power class is reduced.

For another example, the terminal triggering the PHR due to the power class being reduced may be that the terminal triggers the PHR when the power class is about to be reduced but has not yet been reduced.

For another example, the terminal triggering the PHR due to the power class being recovered may be that the terminal triggers the PHR after the power class is recovered.

For another example, the terminal triggering the PHR due to the power class being recovered may be that the terminal triggers the PHR when the power class is about to be recovered but has not yet been recovered.

For example, the power class of the terminal may be PC1.5, PC2, PC3, etc. A maximum transmission power of a terminal with PC1.5 is 29 dBm, a maximum transmission power of a terminal with PC2 is 26 dBm, and a maximum transmission power of a terminal with PC3 is 23 dBm.

PC1.5, PC2, PC3, etc., are merely exemplary examples, and power classes are not limited thereto, which are not exhaustively listed in the present disclosure.

Optionally, the power class reduction may be that the power class is reduced to the first power class. The first power class is lower than a second power class, and the second power class indicates a power class defined by a terminal and/or a power class initially reported by the terminal.

The power class defined by the terminal and the power class initially reported by the terminal may be the same or different.

For example, the power class defined by the terminal is PC1.5, but the power class after the power class reduction for the terminal is PC2, and the power class initially reported by the terminal may be PC2. In this case, the power class defined by the terminal and the power class initially reported by the terminal are different.

For example, the power class reduction may be reduction to any power class lower than the power class defined by the terminal and/or the power class initially reported by the terminal.

For example, the power class reduction may be from PC1.5 to PC2, or, from PC1.5 to PC3.

Optionally, the power class reduction may be step-by-step reduction or skip-level reduction.

For example, the reduction from PC1.5 to PC3 may be reduction from PC1.5 to PC2, and then from PC2 to PC3. In this case, it may be regarded as the step-by-step reduction.

For another example, the reduction from PC1.5 to PC3 may also be direct reduction from PC1.5 to PC3. In this case, it may be regarded as the skip-class reduction.

For another example, the power class recovery may be that the power class is recovered from a current power class to the power class defined by the terminal, or to the power class initially reported by the terminal.

Optionally, the power class recovery may be step-by-step recovery or skip-class recovery.

For example, recovery from PC3 to PC1.5 may be recovery from PC3 to PC2, and then from PC2 to PC1.5. In this case, it may be regarded as the step-by-step recovery.

For another example, the recovery from PC3 to PC1.5 may be direct recovery from PC3 to PC1.5. In this case, it may be regarded as the skip-class recovery.

It may be understood that the power class reduction and the power class recovery are merely exemplary examples, which are not limited in the present disclosure.

Optionally, the power class being reduced is determined in a case that an UL duty cycle corresponding to the terminal sending a PUSCH is greater than a first threshold corresponding to a current power class.

Optionally, the power class being reduced is determined in a case that the UL duty cycle corresponding to the terminal sending the PUSCH is greater than the first threshold corresponding to the current power class.

For example, the first threshold may be configured maxUplinkDutyCycle. That is, when an actual duty cycle exceeds the configured maxUplinkDutyCycle, the power class is reduced.

Optionally, the power class being reduced is determined in a case that the UL duty cycle corresponding to the terminal sending the PUSCH is less than the first threshold corresponding to the current power class.

Optionally, the power class being reduced is determined in a case that the UL duty cycle corresponding to the terminal sending the PUSCH is equal to the first threshold corresponding to the current power class.

For example, when the actual duty cycle does not exceed the configured maxUplinkDutyCycle, the power class is reduced.

For example, the actual duty cycle is a duty cycle statistically calculated in real-time within a current evaluation period.

Optionally, the power class is recovered in a case that the terminal enters the next evaluation period.

It may be understood that the power class being reduced or recovered is determined in a case that the UL duty cycle corresponding to the terminal sending the PUSCH is greater than the first threshold corresponding to the current power class. For example, the power class being reduced or recovered is determined based on an implementation of the terminal. For another example, the power class being reduced or recovered is determined based on a pre-defined rule.

For example, when the terminal enters the next evaluation period, transmission is performed according to the power class defined by the terminal, i.e., the power class is recovered to the power class defined by the terminal.

In some embodiments, terms such as "uplink", "uplink channel", "physical uplink", etc. may be used interchangeably; terms such as "downlink", "downlink channel", "physical downlink", etc. may be used interchangeably; and terms such as "sidelink", "sidelink channels", "sidelink communication", "direct link", "direct communication", "direct link communication", etc. may be used interchangeably.

In some embodiments, terms such as "physical downlink shared channel (PDSCH)", "DL data", etc. may be used interchangeably; and terms such as "PUSCH", "UL data", etc. may be used interchangeably.

In some embodiments, the first information indicates a power class of the terminal.

Optionally, the first information may include a first power class.

Optionally, the first information may include a third power class.

The first power class indicates a power class to which the power class is reduced by the terminal, and the third power class indicates a power class to which the power class is recovered by the terminal.

Optionally, a third power class after the power class recovery may be a second power class. That is, the third power class may be the same as the second power class.

Optionally, a power class after the power class recovery may be a power class other than the second power class. That is, the third power class may be different from the second power class. For example, the power class defined by the terminal is PC1.5, a current power class of the terminal is PC3, and the power class after the power class recovery may be PC2, rather than PC1.5 defined by the terminal.

Optionally, the first information may include a power class variation.

For example, the power class variation may include a power variation based on a requirement of maxUplink-DutyCycle.

It may be understood that the power class variation may be used to indicate the power class. For example, if a power class last reported by the terminal is PC1.5, and a power class variation reported by the terminal is -3 dB, the network may determine a current power class of the terminal as PC2 based on PC1.5 and -3 dB. For another example, if the power class last reported by the terminal is PC2, and the power class variation reported by the terminal is 3 dB, the network may determine the current power class of the terminal as PC1.5 based on PC2 and 3 dB.

The above examples of determining the current power class of the terminal based on the power class variation are merely for convenience of explanation, which are not limited in the present disclosure. Optionally, the first information may include an evaluation period of the terminal.

In some embodiments, the first information indicates the power class variation of the terminal.

For example, the terminal sends the first information, in which the first information indicates the power class variation of the terminal, so that the network device may determine the power class variation of the terminal.

For another example, the terminal sends the first information, in which the first information indicates the power class variation of the terminal, so that the network may determine the current power class of the terminal based on the power class variation of the terminal.

Optionally, evaluation periods of various carriers are consistent, and an evaluation period in the first information is applied to each carrier.

Optionally, evaluation periods of various carriers are different, and an evaluation period for each carrier in the first information is reported independently along with the PH.

Optionally, the first information may include the first duration for at least one of the first power class or the third power class.

In some embodiments, the first duration indicates an estimated duration for at least one of the first power class or the third power class.

For example, when the power class is reduced by the terminal, the first duration may indicate an estimated duration of the first power class.

For another example, when the power class is recovered by the terminal, the first duration may indicate an estimated duration for the third power class.

In some embodiments, the first information for each carrier is reported together with the PH.

Optionally, a power class for each carrier is reported together with the PH.

Optionally, a power class variation for each carrier is reported together with the PH.

Optionally, the power class, the power class variation, and a PH for each carrier are reported together.

In some embodiments, in response to the power class being reduced, the terminal triggers a PHR. A Codepoint corresponding to a power class variation in the PHR only include cases supported for the power class reduction.

For example, in response to the power class being reduced, the terminal triggers the PHR, the terminal may determine a codepoint indication corresponding to the power class variation in the PHR with reference to Table 4-1, Table 4-2, Table 4-3, and Table 5.

Table 4-1

| power class variation indication codepoint | power class variation (dB) |
|---|---|
| 00 | 0 dB |
| 01 | 3 dB |
| 02 | 6 dB |
| 03 | reserved |

Table 4-2

| power class variation indication codepoint | power class variation (dB) |
|---|---|
| 00 | 1 dB |
| 01 | 3 dB |

(continued)

| power class variation indication codepoint | power class variation (dB) |
|---|---|
| 02 | 6 dB |
| 03 | 0 dB |

Table 4-3

| power class variation indication codepoint | power class variation (dB) |
|---|---|
| 00 | 1 dB |
| 01 | 3 dB |
| 02 | 6 dB |
| 03 | reserved |

Table 5

| power class variation indication codepoint | power class variation (dB) |
|---|---|
| 00 | 1 dB |
| 01 | 3 dB |
| 02 | 6 dB |
| 03 | 8 dB |

Table 4-1, Table 4-2, and Table 4-3 are used to represent a correspondence between power class variation indication field information and a power class variation reported in the PHR. A maximum terminal capability class supported by Table 4-1, Table 4-2, and Table 4-3 is PC1.5. The maximum transmission power of the terminal with PC1.5 is 29 dBm. Table 5 is used to represent a correspondence between the power class variation indication field information and the power class variation reported in the PHR. A maximum terminal capability class supported by Table 5 is PC1. A maximum transmission power of a terminal with PC1 is 31 dBm.

For example, when the terminal reduces from PC2 to PC3, the maximum transmission power of the terminal with PC2 is 26 dBm and the maximum transmission power of the terminal with PC3 is 23 dBm, the power class variation may be considered as 3 dB. In this case, the power class variation reported in the PHR corresponds to codepoint 01.

For another example, when the terminal reduces from PC1.5 to PC3, the maximum transmission power of the terminal with PC1.5 is 29 dBm and the maximum transmission power of the terminal with PC3 is 23 dBm, the power class variation may be considered as 6 dB. In this case, the power class variation reported in the PHR corresponds to codepoint 02.

It may be understood that the power class variation of the terminal may be 0 dB, 1 dB, 3 dB, 6 dB, or 8 dB, and different power class variations are indicated by different indication codepoints. An indication codepoint corresponding to the power class variation in the PHR may be determined by referring to any one of above tables. The above tables are merely exemplary, which are not limited by the present disclosure.

For example, codepoint 03 may serve as a reserved codepoint, as shown in Table 4-1 and Table 4-3. It may also be used to indicate a power variation of 0 dB, as shown in Table 4-2. It may also be used to indicate a power variation of 8 dB, as shown in Table 5.

Optionally, a codepoint corresponding to the power class variation reported in the PHR may be that a medium access control element (MAC-CE) reported by the PHR carries the codepoint corresponding to the power class variation.

In some embodiments, in response to the power class being reduced and the power class being recovered, the terminal triggers the PHR. The codepoint corresponding to the power class variation in the PHR supports both the power class reduction and the power class recovery.

For example, when in response to the power class being reduced and the power class being recovered, the terminal triggers the PHR. The terminal may determine the codepoint indication corresponding to the power class variation in the PHR with reference to Table 6.

Table 6

| power class variation indication codepoint | power class variation (dB) |
| --- | --- |
| 00 | 1 dB |
| 01 | 3 dB |
| 02 | 6 dB |
| 03 | -3 dB |
| 04 | -6 dB |
| 05-07 | reserved |

Table 7-1

| power class variation indication codepoint | power class variation (dB) |
| --- | --- |
| 00 | 0 dB |
| 01 | 3 dB |
| 02 | 6 dB |
| 03 | -3 dB |
| 04 | -6 dB |
| 05 | 8 dB |
| 06 | -8 dB |

Table 7-2

| power class variation indication codepoint | power class variation (dB) |
| --- | --- |
| 00 | 1 dB |
| 01 | 3 dB |
| 02 | 6 dB |
| 03 | -3 dB |
| 04 | -6 dB |
| 05 | 8 dB |
| 06 | -8 dB |

Table 6, Table 7-1, and Table 7-2 are used to represent a correspondence between power class variation indication field information and a power class variation reported in the PHR.

For example, when the terminal reduces from PC2 to PC3, the maximum transmission power of the terminal with PC2 is 26 dBm and the maximum transmission power of a terminal with PC3 is 23 dBm, the power class variation may be considered as -3 dB. In this case, the power class variation reported in the PHR corresponds to codepoint 03.

For another example, when the terminal reduces from PC1.5 to PC3, the maximum transmission power of the terminal with PC1.5 is 29 dBm and the maximum transmission power of a terminal with PC3 is 23 dBm, the power class variation may be considered as -6 dB. In this case, the power class variation reported in the PHR corresponds to codepoint 04.

For another example, when the terminal recovers from PC3 to PC2, the power class variation may be considered as 3 dB. In this case, the power class variation reported in the PHR corresponds to codepoint 01.

For another example, when the terminal recovers from PC3 to PC1.5, the power class variation may be considered as 6 dB. In this case, the power class variation reported in the PHR corresponds to codepoint 02.

For example, codepoint 05 and codepoint 06 may serve as reserved codepoints, as shown in Table 6. They may also be used to indicate the power variation of 8 dB and a power variation of -8 dB, as shown in Table 7-1 and Table 7-2.

In some embodiments, terms such as "codebook", "codeword", and "precoding matrix" may be used interchangeably. For example, the codebook may be a collection of one or more codewords/precoding matrices.

In some embodiments, the first information includes a first start time of the evaluation period of the terminal.

In some embodiments, the first start time indicates a start time of the evaluation period of the terminal.

**In** some embodiments, the evaluation period mentioned in the above embodiments may be an evaluation period of a duty cycle of the terminal. The evaluation period of the duty cycle may also be referred to as an evaluation period of a duty cycle of the terminal.

Optionally, the first start time includes a time corresponding to an SFN being 0.

The SFN may be understood as a number of a radio frame.

Optionally, the first start time includes a time obtained by applying an offset to an SFN being 0.

For example, the offset may be predefined by a protocol or configured via a network signaling, and its unit may be radio frame/subframe/slot/ms/s, such as directly predefined as 100 ms, 200 ms, etc., which is not limited in the present disclosure.

For another example, the offset may be determined based on a quantity of granularities. For example, by default, a start time starting counting from SFN=0 is a preset reference point, and a duration corresponding to the granularity is 100 ms. When the quantity of granularities is 1, an actual offset is 100 ms relative to a preset reference point. That is to say, in this case, a start time of the evaluation period of the duty cycle of the terminal is a reference point position obtained by offsetting 100 ms from the start time starting counting from SFN=0.

The examples of 100 ms and 200 ms are merely exemplary, which are not limited in the present disclosure.

In some embodiments, the first information includes a first duration length of the evaluation period of the terminal.

In some embodiments, the first duration length indicates a duration length of the evaluation period of the terminal.

Optionally, the first duration length is represented based on a quantity of first granularities.

The first granularity corresponds to a second duration length.

In some embodiments, the first granularity may be equivalent to the second duration length, i.e., the first duration length is represented based on a quantity of second duration lengths.

In some embodiments, the first granularity may indicate a unit duration length, i.e., the first duration length is represented based on a quantity of unit duration lengths.

For example, a duration length corresponding to a granularity is preset. When the quantity of granularities is 2, the first duration length is twice the duration length corresponding to one granularity; and when the quantity of granularities is 3, the first duration length is three times the duration corresponding to one granularity.

For example, if a first duration length corresponding to a preset quantity of granularities being 1 is 100 ms, when the quantity of granularities is 2, it may be determined that the first duration length is 200 ms; and when the quantity of granularities is 3, it may be determined that the first duration length is 300 ms.

For another example, the second duration length is preset. When the quantity of second durations is 2, the first duration length is twice the second duration length. For example, if the second duration length is preset as 100 ms, when the quantity of second durations is 2, the first duration length is 200 ms.

For another example, a unit duration length is preset. When the quantity of unit duration lengths is 2, the first duration length is twice the unit duration length. For example, if the unit duration length is preset as 100 ms, when the quantity of unit duration lengths is 2, the first duration length is 200 ms.

The above examples of 100 ms, 200 ms, and 300 ms are merely for convenience of explanation, which are not limited in the present disclosure.

Optionally, the first duration length is represented based on a first value. Different first values correspond to different preset intervals of first duration lengths.

For example, different first duration intervals A, B, and C are preset. An association relationship is established between a first value X and the first duration interval A; an association relationship is established between a first value Y and the first duration interval B; an association relationship is established between a first value Z and the first duration interval C. Then, when the first information includes the first value X, it may indicate that the first duration is the first duration interval A.

For example, an interval (100-200 ms) is preset to correspond to a first value 1, an interval (200-300 ms) is preset to correspond to a first value 2, and an interval (300-400 ms) is preset to correspond to a first value 3. Then, when the first information includes the first value 1, it may indicate that the duration length of the evaluation period is the duration interval (100-200 ms). That is, the duration length of the evaluation period may be a value within 100-200 ms. When the first information includes the first value 2, it may indicate that the duration length of the evaluation period is the duration interval (200-300 ms).

The above example intervals are merely for convenience of explanation, and the present disclosure does not limit a size of the duration interval.

Optionally, the first duration length is represented based on a second value. Different second values correspond to different preset second duration lengths.

For example, different duration lengths are preset, and association relationships are established between different duration lengths with different second values. When the first information includes the second value, it may indicate that the first duration length is a duration length corresponding to the second value.

For example, a first duration length of 100 ms is preset to correspond to a second value A, a first duration length of 200 ms is preset to correspond to a second value B, and a first duration length of 300 ms is preset to correspond to a second value C. Then, when the first information includes the second value A, it may indicate that the duration length of the evaluation period is 100 ms. When the first information includes the second value B, it may indicate that the duration length of the evaluation period is 200 ms. When the first information includes the second value C, it may indicate that the duration length of the evaluation period is 300 ms.

The above examples of 100 ms, 200 ms, and 300 ms are merely exemplary, which are not limited in the present disclosure.

It may be understood that the first value and the second value may be in any form, such as numbers, letters, symbols, etc., which are not limited in the present disclosure.

In some embodiments, the first information includes a second start time of a first duration length of the terminal.

In some embodiments, the second start time indicates a start time of the first duration length.

Optionally, the second start time may be a sending time of the PHR.

Optionally, the second start time may be a first start time corresponding to the evaluation period.

Optionally, the second start time may be a time determined based on an SFN being 0 and the quantity of second granularities, in which the second granularity corresponds to a third duration length.

For example, assuming the quantity of second granularities is M, and the third duration length corresponding to the second granularity is K. The second start time is a time obtained by offsetting M*K from the time corresponding to the SFN being 0.

For example, when the third duration length K corresponding to the second granularity is 100 ms, and the quantity M of second granularities is 1, the second start time is a time offset by 200 ms from the SFN being 0. When the quantity M of second granularities is 2, the second start time is a time offset by 200 ms from the SFN being 0.

It may be understood that, when the quantity of second granularities may also be 0, the second start time is the time corresponding to the SFN being 0.

In some embodiments, the second granularity may be equivalent to the third duration length. The second start time may be determined based on a reference point and a quantity of third duration lengths.

For example, assuming the quantity of third duration lengths is M, and a size of the third duration length is K. The second start time is a time offset by M*K from the the SFN being 0.

In some embodiments, the terminal may send second information to the network device, in which the second information indicates a quantity of granularities.

Optionally, the terminal may send the second information first and then send the first information.

Optionally, the terminal may send the second information and the first information simultaneously.

Optionally, the terminal may send the second information first and subsequently does not need to send the second information again.

Optionally, the terminal may send the second information each time it sends the first information.

Optionally, the second start time may be determined based on a second reference point. The second reference point is a reference point adjacent to a sending time of the PHR, among reference points obtained by dividing the evaluation period based on a third granularity, and the third granularity corresponds to a fourth duration length.

For example, assuming the evaluation period is divided based on the third granularity and N reference points are obtained, and the third granularity corresponds to the fourth duration length. When the sending time of the PHR is between the i-th reference point and the (i+1)-th reference point, the second start time may be a time corresponding to the i-th reference point or a time corresponding to the (i+1)-th reference point. The time corresponding to the i-th reference point is a time after i third granularities from the start time of the evaluation period. The time corresponding to the (i+1)-th reference point is a time after (i+1) granularities from the start time of the evaluation period.

For example, assuming N is 5, the evaluation period is divided into 5 reference points, and the fourth duration length corresponding to the third granularity is 100 ms, in this case, if the sending time of the PHR is between the second reference point and a third reference point, i.e., i is 2, a second start time of a duration of the power class variation may be determined based on the second reference point, which is 200 ms, and may also be determined based on the third reference point, which is 300 ms.

In some embodiments, the third granularity may be equivalent to the fourth duration length. The second start time may be a time determined based on a quantity of fourth duration lengths.

For example, assuming the evaluation period is divided based on a size of the fourth duration length into N fourth duration lengths, if the sending time of the PHR is between a second fourth duration length and a third fourth duration length, i.e., i is 2, a second start time of a duration of the power class variation may be determined based on the second fourth duration length, which is 200 ms, and may also be determined based on the third fourth duration length, which is 300 ms.

Optionally, the second start time may be a sending time of the PUSCH.

It may be understood that a representation manner of the duration of the power class variation is the same as a representation manner of the duration of the power class, which will not be repeated here in the present disclosure.

In some embodiments, the first information includes a fifth duration length of a first duration of the terminal.

In some embodiments, the fifth duration length indicates a duration length of the first duration.

Optionally, the fifth duration length is represented based on a quantity of third granularities. Each third granularity corresponds to a same sixth duration length, and the sixth duration length is less than or equal to the fifth duration length.

Optionally, the fifth duration length is represented based on a third value. Different third values correspond to different second time intervals, and the second time interval is an interval within which a preset duration length corresponding to the power class falls.

Optionally, the fifth duration length is represented based on a fourth value. Different fourth values correspond to different preset duration lengths corresponding to the power class.

It may be understood that a specific representation manner of the fifth duration length may be referred to the specific representation manner of the first duration length above, which will not be repeated here in the present disclosure.

In some embodiments, the first information further includes an MOP configured for the terminal. The MOP is determined based on a first output power, a power variation, and MPR, in which the first output power is determined based on the second power class, and the power variation and the MPR are determined based on the second power class, or the power variation and the MPR are determined based on the third power class.

For example, the MOP is determined based on formula 1 and formula 2.

In some embodiments, the first output power may be $P_{PowerClass}$ in the formula 1, and the power variation may be $\Delta P_{PowerClass}$ in the formula 1. The first output power is determined based on the second power class, and the second power class indicates a power class defined by a terminal and/or a power class initially reported by the terminal.

The power class defined by the terminal and the power class initially reported by the terminal may be the same or different.

Optionally, when a UL duty cycle of the terminal exceeds the maximum UL duty cycle, and the power class being reduced, the terminal may determine the power variation and the MPR based on the power class defined by the terminal.

For example, when the power class is reduced from PC2 to PC3, the power variation is determined based on the second power class, i.e., the power variation at this time does not include a power variation corresponding to power class reduction. The terminal determines the MPR based on PC2 referring to Table 2 above.

Optionally, when a UL duty cycle of the terminal exceeds the maximum UL duty cycle, and the power class being reduced, the terminal may determine a maximum transmission power based on a power class to which the power class changes.

For example, when the power class is reduced from PC2 to PC3, the power variation is determined based on the second power class, i.e., the power variation at this time includes a power variation corresponding to the power class reduction. The terminal determines the maximum transmission power based on PC3 referring to the Table 3 above.

The communication method involved in the embodiments of the present disclosure may include at least one of S2101 to S2102. For example, S2101 may be implemented as an independent embodiment.

**In** some embodiments, S2101 and S2102 may be executed in any order or simultaneously.

In some embodiments, S2102 is optional, and this step may be omitted or replaced in different embodiments.

In some embodiments, reference may be made to other optional implementations recorded before or after the description corresponding to FIG. 2.

FIG. 3a is a flowchart of a communication method according to the embodiments of the present disclosure. As shown in FIG. 3a, the embodiments of the present disclosure relate to a communication method, performed by the terminal 101. The above method includes following steps at S3101 to S3102.

At S3101, second information is sent.

Optional implementations of S3101 may be referred to optional implementations of S2101 in FIG. 2, and other related parts involved in the embodiments of FIG. 2, which will not be repeated here.

**In** some embodiments, the terminal 101 sends the second information to the network device 102, but is not limited thereto, and may also send the second information to other entities.

The communication method involved in the embodiments of the present disclosure may include at least one of S3101 to S3102. For example, S3101 may be implemented as an independent embodiment.

At S3102, first information is sent.

Optional implementations of S3102 may be referred to optional implementations of S2102 in FIG. 2, and other related parts involved in the embodiments of FIG. 2, which will not be repeated here.

In some embodiments, the terminal 101 sends the first information to the network device 102, but is not limited thereto, and may also send the second information to other entities.

**In** some embodiments, S3101 and S3102 may be executed in any order or simultaneously.

In some embodiments, S3101 is optional, and this step may be omitted or replaced in different embodiments.

In some embodiments, reference may be made to other optional implementations recorded before or after the description corresponding to FIG. 2.

FIG. 3b is a flowchart of a communication method according to the embodiments of the present disclosure. As shown in FIG. 3b, the embodiments of the present disclosure relate to a communication method, performed by the terminal 101. The above method includes a following step at S3201.

At S3201, first information is sent.

Optional implementations of S3201 may be referred to optional implementations of S2102 in FIG. 2 and S3102 in FIG. 3a, and other related parts involved in the embodiments of FIG. 2 and FIG. 3a, which will not be repeated here.

In some embodiments, sending the first information includes: sending the first information includes: sending the first information in case that at least one of following conditions is satisfied: the power class being reduced to a first power class, in which the first power class is lower than a second power class, and the second power class is a power class defined by the terminal and/or a power class initially reported by the terminal; or the power class being recovered.

In some embodiments, the power class being reduced is determined by: determining the power class is reduced in a case that an UL duty cycle corresponding to the terminal sending a PUSCH is greater than a first threshold corresponding to a current power class, in which different power classes correspond to different first thresholds.

In some embodiments, the power class being recovered is determined by at least one of: determining that the power class being recovered in a case that the terminal starts a next evaluation period; or determining that the power class being recovered in a case that an UL duty cycle corresponding to the terminal sending a PUSCH is less than or equal to a second threshold.

In some embodiments, determining that the power class being recovered in a case that the terminal starts the next evaluation period includes: the power class being recovered to the power class defined by the terminal and/or the power class initially reported by the terminal.

In some embodiments, the first information includes at least one of: a first power class to which the power class is reduced; a third power class to which the power class is recovered; a power class variation of the terminal; an evaluation period of the terminal; or a first duration corresponding to at least one of a first power class or a third power class, in which the first duration indicates an estimated duration for at least one of the first power class or the third power class.

In some embodiments, the evaluation period includes a first start time, and the first start time is a start time of the evaluation period; and in which the first start time includes at least one of: a time corresponding to an SFN being 0; or a time obtained by applying an offset to an SFN being 0.

In some embodiments, the evaluation period includes a first duration length, and the first duration length is a duration length of the evaluation period; and in which the first duration length is represented in at least one of following manners: the first duration length being represented based on a quantity of first granularities, in which the first granularity corresponds to a second duration length; the first duration length being represented based on a first value, in which the first value corresponds to a first duration interval, the first duration interval is a preset duration range of the evaluation period, and the first duration length falls within the preset duration range and is represented by the preset duration range; or the first duration length being represented based on a second value, in which the second value corresponds to a preset duration length of the evaluation period.

In some embodiments, the first duration includes a second start time; and in which the second start time includes at least one of: a sending time of the PHR; a first start time corresponding to the evaluation period; a time determined based on a first reference point and a quantity of second granularities, in which the first reference point is a time corresponding to an SFN being 0, and the second granularity corresponds to a third duration length; a time determined based on a second reference point, in which the second reference point is a reference point adjacent to a sending time of the PHR, among reference points obtained by dividing the evaluation period based on a third granularity, and the third granularity corresponds to a fourth duration length; or a sending time of the PUSCH.

In some embodiments, the second start time includes a time determined based on the first reference point and the quantity of second granularities; and the method further includes: sending second information, in which the second information indicates the quantity of second granularities.

In some embodiments, the first duration includes a fifth duration length; and in which the fifth duration length is represented in at least one of the following manners: the fifth duration length being represented based on a quantity of third granularities, in which the third granularity corresponds to a sixth duration length; the fifth duration length being represented based on a third value, in which the third value corresponds to a second duration interval, the second duration interval is a preset duration range for the power class, and the fifth duration length falls within the preset duration range and is represented by the preset duration range; or the fifth duration length being represented based on a fourth value, in which the fourth value corresponds to a preset duration length for the power class.

In some embodiments, the first information includes an MOP of the terminal, the MOP being determined based on a first output power, a power variation, and the MPR, in which the first output power is determined based on the second power class, and the power variation and the MPR are determined based on the second power class, or the power variation and the MPR are determined based on the third power class.

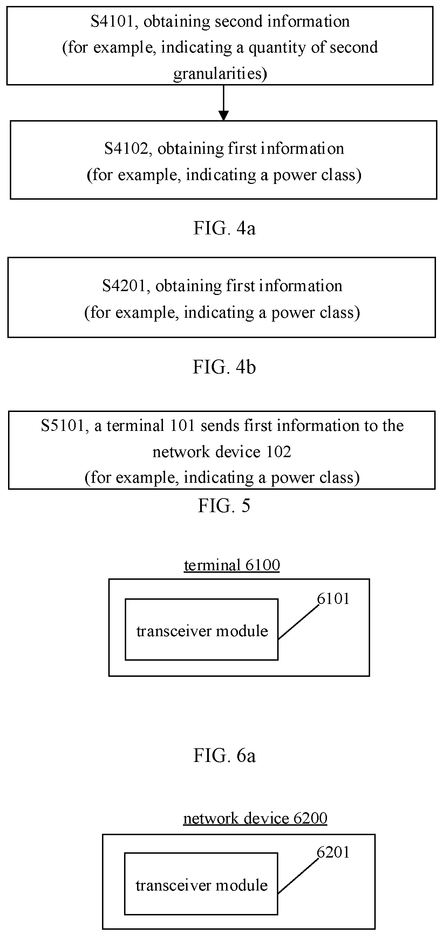

FIG. 4a is a flowchart of a communication method according to the embodiments of the present disclosure. As shown in FIG. 4a, the embodiments of the present disclosure relate to a communication method. The above method includes following steps at S4101 to S4102.

At S4101, second information is obtained.

Optional implementations of S4101 may be referred to optional implementations of S2101 in FIG. 2, and other related parts involved in the embodiments of FIG. 2, which will not be repeated here.

In some embodiments, S4101 is optional, and this step may be omitted or replaced in different embodiments.

In some embodiments, the network device receives the second information sent by the terminal, but is not limited thereto, and may also receive the second information sent by other entities.

In some embodiments, the network device 102 receives the second information sent by the terminal 101, but is not limited thereto, and may also receive the second information sent by other entities.

In some embodiments, the network device 102 obtains the second information stipulated by a protocol.

In some embodiments, the network device 102 obtains the second information from an upper layer(s).

In some embodiments, the network device 102 obtains the second information by processing.

In some embodiments, S4101 is omitted, and the network device 102 autonomously implements a function indicated by the second information, or the above function is default or preset.

At S4102, first information is obtained.

Optional implementations of S4102 may be referred to optional implementations of S2102 in FIG. 2, and other related parts involved in the embodiments of FIG. 2, which will not be repeated here.

FIG. 4b is a flowchart of a communication method according to the embodiments of the present disclosure. As shown in FIG. 4a, the embodiments of the present disclosure relate to a communication method. The above method includes a following step at S4201.

At S4201, first information is obtained.

Optional implementations of S4201 may be referred to optional implementations of S2102 in FIG. 2, and other related parts involved in the embodiments of FIG. 2, which will not be repeated here.

In some embodiments, the network device receives the first information sent by the terminal, but is not limited thereto, and may also receive the first information sent by other entities.

In some embodiments, the network device 102 receives the first information sent by the terminal, but is not limited thereto, and may also receive the first information sent by other entities.

In some embodiments, the network device 102 receives the first information sent by the terminal 101, but is not limited thereto, and may also receive the first information sent by other entities.

In some embodiments, the network device 102 obtains the first information stipulated by a protocol.

In some embodiments, the network device 102 obtains the first information from an upper layer(s).

In some embodiments, the network device 102 obtains the first information by processing.

In some embodiments, S4201 is omitted, and the network device 102 autonomously implements a function indicated by the first information, or the above function is default or preset.

In some embodiments, the network device 102 receives the first information sent by the terminal 101, but is not limited thereto, and may also receive the first information sent by other entities.

In some embodiments, the network device 102 obtains the first information stipulated by the protocol.

In some embodiments, the network device 102 obtains the first information from the upper layer(s).

In some embodiments, the network device 102 obtains the first information by processing.

In some embodiments, S4102 is omitted, and the network device 102 autonomously implements a function indicated by the first information, or the above function is default or preset.

In some embodiments, the first information is generated upon satisfaction of at least one of the following conditions: the power class is reduced to a first power class, in which the first power class is lower than a second power class, and the second power class is a power class defined by the terminal and/or a power class initially reported by the terminal; or the power class being recovered.

In some embodiments, the power class being reduced is determined by: determining the power class being reduced in a case that an UL duty cycle corresponding to the terminal sending a PUSCH is greater than a first threshold corresponding to a current power class, in which different power classes correspond to different first thresholds.

In some embodiments, the power class being recovered is determined by at least one of: determining that the power class being recovered in a case that the terminal starts a next evaluation period; or determining that the power class being recovered in a case that an UL duty cycle corresponding to the terminal sending a PUSCH is less than or equal to a second threshold.

In some embodiments, determining that the power class being recovered in a case that the terminal starts the next evaluation period includes: the power class being recovered to the power class defined by the terminal and/or the power class initially reported by the terminal.

In some embodiments, the first information includes at least one of: a first power class to which the power class is reduced; a third power class to which the power class is recovered; a power class variation of the terminal; an evaluation period of the terminal; or a first duration corresponding to at least one of a first power class or a third power class, in which the first duration indicates an estimated duration for at least one of the first power class or the third power class.

In some embodiments, the evaluation period includes a first start time, and the first start time is a start time of the evaluation period; and in which the first start time includes at least one of: a time corresponding to an SFN being 0; or a time obtained by applying an offset to an SFN being 0.

In some embodiments, the evaluation period includes a first duration length, and the first duration length is a duration length of the evaluation period; and in which the first duration length is represented in at least one of following manners: the first duration length being represented based on a quantity of first granularities, in which the first granularity corresponds to a second duration length; the first duration length being represented based on a first value, in which the first value corresponds to a first duration interval, the first duration interval is a preset duration range of the evaluation period, and the first duration length falls within the preset duration range and is represented by the preset duration range; or the first duration length being represented based on a second value, in which the second value corresponds to a preset duration length of the evaluation period.

In some embodiments, the first duration includes a second start time; and in which the second start time includes at least one of: a sending time of the PHR; a first start time corresponding to the evaluation period; a time determined based on a first reference point and a quantity of second granularities, in which the first reference point is a time corresponding to an SFN being 0, and the second granularity corresponds to a third duration length; a time determined based on a second reference point, in which the second reference point is a reference point adjacent to a sending time of the PHR, among reference points obtained by dividing the evaluation period based on a third granularity, and the third granularity corresponds to a fourth duration length; or a sending time of the PUSCH.

In some embodiments, the second start time includes a time determined based on the first reference point and the quantity of second granularities; and the method further includes: sending second information, in which the second information indicates the quantity of second granularities.

In some embodiments, the first duration includes a fifth duration length; and in which the fifth duration length is represented in at least one of the following manners: the fifth duration length being represented based on a quantity of third granularities, in which the third granularity corresponds to a sixth duration length, and the sixth duration length is less than or equal to the fifth duration length; the fifth duration length being represented based on a third value, in which different third values correspond to different second time intervals, and the second time interval is an interval within which a preset duration length corresponding to the power class falls; or the fifth duration length being represented based on a fourth value, in which different fourth values correspond to different preset duration lengths corresponding to the power class.

In some embodiments, the first information includes an MOP of the terminal, the MOP is determined based on a first output power, a power variation, and a MPR, in which the first output power is determined based on the second power class, and the power variation and the MPR are determined based on the second power class, or the power variation and the MPR are determined based on the third power class.

FIG. 5 is a flowchart of a communication method according to the embodiments of the present disclosure. As shown in FIG. 5, the embodiments of the present disclosure relate to a communication method. The above method includes a following step at S5101.

At S5101, the terminal 101 sends first information, in which the first information indicates full-power modes of different power classes corresponding to the terminal.

Optional implementations of S5101 may be referred to S2102 in FIG. 2 and S3102 in FIG. 3a, and other related parts involved in the embodiments of FIG. 2a and FIG. 3a, which will not be repeated here.

In some embodiments, the above method may include methods related to the communication system 100, the terminal 101, the network device 102, and other entities in the above embodiments, which will not be repeated here.

In some embodiments, the above method may include methods related to the communication system 100, the terminal 101, the network device 102, and other entities in the above embodiments, which will not be repeated here.

The embodiments of the present disclosure also provide a communication method as follows.

In some embodiments, based on PHR measurement and reporting, the terminal reports terminal power information related to the current power class or the power class variation.

In some embodiments, "reporting" may also be "sending".

In some embodiments, a trigger condition of the PHR: a change in the power class.

Optionally, the PHR is triggered only when the power class is reduced (i.e., when an actual duty cycle value exceeds a configured maxUplinkdutycycle value). Optionally, the PHR is triggered when the power class is either reduced or recovered(i.e., when the actual duty cycle value exceeds the configured maxUplinkdutycycle value). Optionally, a condition for recovering the power class may be that the terminal starts a new evaluation period and resumes sending according to the power class defined by the terminal.

Optionally, the condition for recovering the power class may be that when a statistically calculated actual duty cycle value does not exceed the configured maxUplinkdutycycle value.

In some embodiments, a specific indication method for reporting information:

Report content one: power class reporting, and each carrier is reported together with PH;

Report content two: power class variation, only a power class variation ($\Delta P_{PowerClass}$) generated under a requirement of the maxUplinkdutycycle is reported, and in which each carrier is also reported together with PH.

Optionally, when the PHR is triggered only by the power class being reduced, a codepoint corresponding to a corresponding variation only includes a case corresponding to reducing the power class. Based on different situations and terminal implementations, the power class being reduced may adopt a step-by-step reduction manner such as from PC2 to PC3, or may adopt a skip-class reduction manner, such as directly from PC1.5 to PC3.

Corresponding to a case where a reported codepoint only include a reduced power class variation, Table 4-1, Table 4-2, and Table 4-3 support a maximum terminal capability class of PC1.5 (29 dBm), and Table 5 supports a maximum terminal capability class of PC1 (31 dBm).

As shown in Table 4-1, Table 4-2, Table 4-3, and Table 5, when a terminal with PC2 reduces to PC3, an MAC-CE corresponding to the PHR carries codepoint 01 corresponding to the power class variation. By looking up a defined table, it may be found that the power class variation reported by the terminal corresponding to a reduced power class is 3 dB.

Optionally, when the PHR is triggered by the power class being reduced or recovered, the codepoint corresponds to the corresponding variation supports both power class reduction and power class recovery. Based on different situations and terminal implementations, the power class reduction may adopt a step-by-step reduction manner such as from PC2 to PC3, or may adopt a skip-class reduction manner, for example, directly from PC1.5 to PC3. Correspondingly, the power class recovery may adopt a step-by-step recovery manner such as from PC3 to PC2, or may adopt a skip-class recovery manner such as directly from PC3 to PC1.5.

As shown in Table 6, Table 7-1, and Table 7-2, when the terminal with PC2 reduces to PC3, the MAC-CE corresponding to the PHR carries codepoint 03 corresponding to the power class variation. By looking up a defined table, it may be found that the power class variation reported by the terminal corresponding to a reduced power class is -3 dB. When the terminal with PC3 reduces to PC2, the MAC-CE corresponding to the PHR report carries codepoint 01 corresponding to the power class variation. By looking up a defined table, it may be found that the power class variation reported by the terminal corresponding to the reduced power class is 3 dB.

Report content three: optionally reporting a starting point T and a time length L of the evaluation period.

In some embodiments, the starting point T of the evaluation period may be a first start time.

In some embodiments, the time length L may be the first duration length.

Reporting method:

Optionally, evaluation periods of various carriers are consistent, and a reported value applies to each carrier.

Optionally, evaluation periods of various carriers are different, and they are reported independently together with PH corresponding to each carrier.

Start time:

1) SFN=0; and
2) Offsetting from SFN=0 by an offset.

Length:

1) A predefined/configured granularity X of the duration, for example, X = 100 ms, and a reported duration Y, for example, Y = 3, and a corresponding reported duration is 300ms.
2) The report is based on an absolute value/mapped value of a reporting time, for example, the reporting time falls within a corresponding mapping interval, such as 300 ms falling within a predefined interval 3 (corresponding to 300 - 400 ms), and a mapped value 3 corresponding to the interval 3 is reported.

Optionally, it is defined as selecting and reporting from an optional value set.

Report content four: simultaneously reporting a duration estimate corresponding to the power class or the power class variation, which may include:

Predefining or reporting the start time: unit is slot/frame;

1) A sending time of PHR;
2) A starting point of the evaluation period (valid when the report content three is defined);
**3)** Using a predefined or configured granularity K starting from SFN=0 as a reference point. A specific starting point may be configured by a network, for example, M, and then it starts at M*K. It may be determined by other methods, for example, the starting point is determined by the sending time of PHR. If the sending time of PHR is between reference point i and reference point i+1, it may start at i*K, or it may start at (i+1)*K, which is similar to a decision of a sending time of PUSCH; and

**4)** A sending time of a PUSCH.

Duration length reporting:

1) A predefined/configured granularity X of the duration, for example, X = 100 ms, and a reported duration Y, for example, Y = 3, and a corresponding reported duration is 300 ms;

2) The report is based on an absolute value/mapped value of a reporting time, for example, the reporting time falls within a corresponding mapping interval, such as 300 ms falling within a predefined interval 3 (corresponding to 300 - 400 ms), and a mapped value 3 corresponding to the interval 3 is reported; and

3) Defined as selecting and reporting from an optional value set.

In some embodiments, the duration estimate may be a first duration.

In some embodiments, the duration length may be a duration length of the first duration.

It may be understood that above examples of 100 ms, 200 ms, and 300 ms are all illustrative examples, which are not limited in the present disclosure.

In some embodiments, after a PC changes because a duty cycle of the terminal exceeds a maxDutyCycle capability, the network may not determine an actual terminal power class corresponding to a maximum transmission power ($P_{CMAX,f}$) actually used by the terminal for reporting a corresponding carrier. Therefore, it is necessary to determine rules applied for reporting $P_{CMAX,f}$.

Optionally, a power class of the terminal remains unchanged, and $\Delta P_{PowerClass}$ is reported. Therefore, MPR table corresponding to the MPR still corresponds to the power class configured for the terminal.

Optionally, the power class of the terminal remains unchanged, $\Delta P_{PowerClass}$ is reported, and a MPR table corresponding to a changed power class is used to calculate configured transmission power.

In some embodiments, the MPR table, for example, may be Table 2 and Table 3. Table 2 is a MPR table corresponding to PC2, and Table 3 is a MPR table corresponding to PC3.

The embodiments of the present disclosure also provide an apparatus for implementing any one of the above methods. For example, an apparatus is provided, in which the apparatus includes units or modules for implementing steps performed by the terminal in any one of the above methods. For another example, another apparatus is further provided, including units or modules for implementing steps performed by the network device (for example, an access network device, a core network function node, a core network device, etc.) in any one of the above methods.

It should be understood that division of units or modules in the above apparatuses is merely a division of logical functions. In actual implementations, the units may be fully or partially integrated into a single physical entity or may be physically separated. In addition, the units or modules in the apparatus may be implemented in a form of a processor invoking software. For example, the apparatus includes a processor, which is connected to a memory for storing instructions. The processor invokes the instructions stored in the memory to implement any one of the above methods or the functions of the units or modules in the apparatus. The processor may be a general-purpose processor, such as a central processing unit (CPU) or a microprocessor, and the memory may be internal or external to the apparatus. Alternatively, the units or modules in the apparatus may be implemented in a form of a hardware circuit. Part or all of the functions of the units or modules may be realized via a design of the hardware circuit. The hardware circuit may be understood as one or more processors. For example, in an implementation, the hardware circuit is an application-specific integrated circuit (ASIC). Functions of part or all of the units are realized by designing logical relationships among components in the circuit. In another implementation, the hardware circuit may be implemented using a programmable logic device (PLD). Taking a field programmable gate array (FPGA) as an example, the FPGA may include a large number of logic gate circuits, and connections among the logic gate circuits are configured by configuration files to realize the functions of part or all of the units or modules. All units or modules of the above apparatus may be fully implemented in a form of the processor invoking software, or fully implemented in a form of the hardware circuit, or partially implemented in the form of the processor invoking software and remaining part implemented in the form of the hardware circuit.

In the embodiments of the present disclosure, the processor is a circuit with a signal processing capability. In an implementation, the processor may be a circuit with a capability of reading and executing instructions, such as a CPU, a microprocessor, a graphics processing unit (GPU) (which may be understood as a microprocessor), or a digital signal processor (DSP). In another implementation, the processor may realize certain functions via a logical relationship of the hardware circuit. The logical relationship of the hardware circuit may be fixed or reconfigured. For example, the processor may be a hardware circuit implemented by an ASIC or PLD, such as an FPGA. In a reconfigurable hardware circuit, a process in which the processor loads configuration files to configure the hardware circuit may be understood as a process that the processor loads instructions to realize the functions of part or all of the units or the modules described above. In addition, the hardware circuit may be designed specifically for artificial intelligence and may be understood as an ASIC, such as a neural network processing unit (NPU), a tensor processing unit (TPU), or a deep learning processing unit (DPU).

FIG. 6a is a schematic diagram of a terminal according to the embodiments of the present disclosure. As shown in FIG. 6a, a terminal 6100 may include: a transceiver module 6101. In some embodiments, the transceiver module is configured to send first information, in which the first information indicates full-power modes of different power classes corresponding to the terminal. Optionally, the transceiver module is configured to perform at least one of communication steps S2101 or S2102 such as sending and/or receiving performed by the terminal 101 in any one of the above methods, which will not be repeated here.

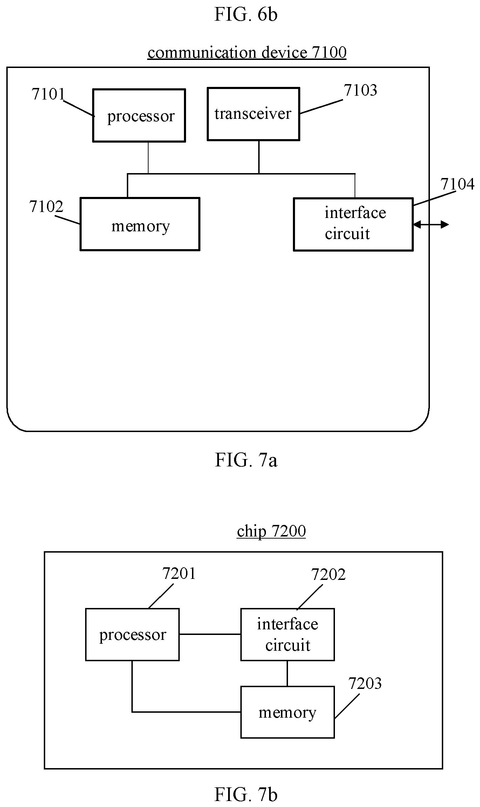

FIG. 6b is a schematic diagram of a network device 6200 according to the embodiments of the present disclosure. As shown in FIG. 6b, a network device 6200 may include: a transceiver module 6201. The transceiver module 6201 is configured to receive first information, in which the first information indicates full-power modes of different power classes corresponding to a terminal. Optionally, the transceiver module 6201 is configured to perform at least one of the communication steps S2101 or S2102 such as sending and/or receiving performed by the terminal 101 in any one of the above methods, which will not be repeated here.

In some embodiments, the transceiver module may include a sending module and/or a receiving module. The sending module and the receiving module may be separated or integrated together. Optionally, the transceiver module may be interchanged with a transceiver.

FIG. 7a is a block diagram of a communication device 7100 according to an embodiment of the present disclosure. The communication device 7100 may be a network device, such as an access network device, a core network device, etc., or may be a terminal, such as a user equipment, etc., or may be a chip, a chip system, or a processor that supports the network device to implement any one of the above methods, or may also be a chip, a chip system, or a processor that supports the terminal to implement any one of the above methods. The communication device 7100 may be used to implement the method described in the above method embodiments. For details, reference may be made to descriptions in the above method embodiments.

As shown in FIG. 7a, the communication device 7100 includes one or more processors 7101. The processor 7101 may be a general-purpose processor or a special-purpose processor, etc., for example, may be a baseband processor or a central processing unit. The baseband processor may be used to process a communication protocol and communication data. The central processor may be used for controlling the communication device (e.g., a base station, a baseband chip, a terminal, a terminal chip, a DU, a CU, or the like), executing programs, and processing data of the programs. The communication device 7100 is configured to implement any one of the above methods.

In some embodiments, the communication device 7100 further includes one or more memories 7102 for storing instructions. Optionally, all or part of the memories 7102 may also be located outside the communication device 7100.

In some embodiments, the communication device 7100 further includes one or more transceivers 7103. When the communication device 7100 includes one or more transceivers 7103, the transceiver 7103 performs at least one of communication steps S2101 or S2102 such as sending and/or receiving in the above method, and the processor 7101 performs other steps.

In some embodiments, the transceiver may include a receiver and a transmitter, which may be separate or integrated. Optionally, terms such as transceiver, transceiver unit, transceiver machine, transceiver circuit, etc. may be used interchangeably; terms such as transmitter, sending unit, transmitter machine, sending circuit, etc. may be used interchangeably; and terms such as receiver, receiving unit, receiver machine, receiving circuit, etc. may be used interchangeably.

In some embodiments, the communication device 7100 may include one or more interface circuits 7104. Optionally, the interface circuit 7104 is connected to the memory 7102 and may be used to receive signals from the memory 7102 or other devices, or send signals to the memory 7102 or other devices. For example, the interface circuit 7104 may read instructions stored in the memory 7102 and send the instructions to the processor 7101.

The communication device 7100 in the description of the above embodiments may be a network device or a terminal, but the scope of the communication device 7100 described in the disclosure is not limited thereto, and the structure of the communication device 7100 may not be limited by FIG. 7a. The communication device may be a stand-alone device or may be part of a larger device. For example, the communication device may be: (1) a stand-alone IC, a chip, a chip system or a subsystem; (2) a collection of ICs including one or more ICs. In some examples, the collection of ICs may also include storage components for storing data and programs; (3) an ASIC, such as a modem; (4) a module that may be embedded within other devices; (5) a receiver, a terminal, a smart terminal, a cellular phone, a wireless device, a handset, a mobile unit, an vehicle-mounted device, a network device, a cloud device, an artificial intelligence device, and the like; and (6) others.

FIG. 7b is a block diagram of a chip 7200 according to an exemplary embodiment. For the case where the communication device 7100 may be a chip or a chip system, reference may be made to the block diagram of the chip 7200 shown in FIG. 7b, but it is not limited thereto.

The chip 7200 includes one or more processors 7201, and the chip 7200 is configured to execute any one of the above methods.

In some embodiments, the chip 7200 further includes one or more interface circuits 7202. Optionally, the interface circuit 7202 is connected to a memory 7203. The interface circuit 7202 may be used to receive signals from the memory 7203 or other devices, and the interface circuit 7202 may be used to send the signals to the memory 7203 or other devices. For example, the interface circuit 7202 may read instructions stored in the memory 7203 and send the instructions to the processor 7201.

In some embodiments, the interface circuit 7202 performs at least one of communication steps S2101 or S2102 such as sending and/or receiving in the above method, and the processor 7201 performs at least one of other steps S2101 or S2102.

In some embodiments, terms such as interface circuit, interface, transceiver pin, transceiver, etc. may be used interchangeably.

In some embodiments, the chip 7200 further includes one or more memories 7203 for storing instructions. Optionally, all or some of the memories 7203 may be located outside the chip 7200.

The present disclosure further provides a storage medium for storing instructions. When the instructions are run on the communication device 7100, the communication device 7100 is caused to implement any one of the above methods. Optionally, the storage medium is an electronic storage medium. Optionally, the storage medium is a computer-readable storage medium, but it is not limited thereto, and it may also be a storage medium readable by other devices. Optionally, the storage medium may be a non-transitory storage medium, but it is not limited thereto, and it may also be a transitory storage medium.

The present disclosure further provides a program product. When the program product is executed by the communication device 7100, the communication device 7100 is caused to implement any one of the above methods. Optionally, the program product is a computer program product.

The present disclosure further provides a computer program. When the computer program is running on a computer, the computer is caused to implement any one of the above methods.

**Claims**

1. A communication method, comprising:
   sending first information, wherein the first information indicates a power class and is sent via a power headroom report (PHR).

2. The method of claim 1, wherein sending the first information comprises:
   sending the first information in a case that at least one of following conditions is satisfied:

   the power class being reduced to a first power class, wherein the first power class is lower than a second power class, and the second power class is a power class defined by a terminal and/or a power class initially reported by the terminal; or
   the power class being recovered.

3. The method of claim 2, wherein the power class being reduced is determined by:
   determining that the power class is reduced in a case that an uplink (UL) duty cycle corresponding to the terminal sending a physical uplink shared channel (PUSCH) is greater than a first threshold corresponding to a current power class, wherein different power classes correspond to different first thresholds.

4. The method of claim 2 or 3, wherein the power class being recovered is determined by at least one of:

   determining that the power class is recovered in a case that the terminal starts a next evaluation period; or
   determining that the power class is recovered in a case that an uplink (UL) duty cycle corresponding to the terminal sending a physical uplink shared channel (PUSCH) is less than or equal to a second threshold.

5. The method of claim 4, wherein determining that the power class is recovered in a case that the terminal starts the next evaluation period comprises:
   the power class being recovered to the power class defined by the terminal and/or the power class initially reported by the terminal.

6. The method of any one of claims 1 to 5, wherein the first information comprises at least one of:

a first power class to which the power class is reduced;
a third power class to which the power class is recovered;
a power class variation of the terminal;
an evaluation period of the terminal; or
a first duration corresponding to at least one of a first power class or a third power class, wherein the first duration indicates an estimated duration for at least one of the first power class or the third power class.

7. The method of claim 6, wherein the evaluation period comprises a first start time, and the first start time is a start time of the evaluation period; and
wherein the first start time comprises at least one of:

a time corresponding to a system frame number (SFN) being 0; or
a time obtained by applying an offset to an SFN being 0.

8. The method of claim 6 or 7, wherein the evaluation period comprises a first duration length, and the first duration length is a duration length of the evaluation period; and
wherein the first duration length is represented in at least one of following manners:

the first duration length being represented based on a quantity of first granularities, wherein the first granularity corresponds to a second duration length;
the first duration length being represented based on a first value, wherein the first value corresponds to a first duration interval, the first duration interval is a preset duration range of the evaluation period, and the first duration length falls within the preset duration range and is represented by the preset duration range; or
the first duration length being represented based on a second value, wherein the second value corresponds to a preset duration length of the evaluation period.

9. The method of any one of claims 6 to 8, wherein the first duration comprises a second start time; and
wherein the second start time comprises at least one of:

a sending time of the PHR;
a first start time corresponding to the evaluation period;
a time determined based on a first reference point and a quantity of second granularities, wherein the first reference point is a time corresponding to a system frame number (SFN) being 0, and the second granularity corresponds to a third duration length;
a time determined based on a second reference point, wherein the second reference point is a reference point adjacent to a sending time of the PHR, among reference points obtained by dividing the evaluation period based on a third granularity, and the third granularity corresponds to a fourth duration length; or
a sending time of a physical uplink shared channel (PUSCH).

10. The method of claim 9, wherein the second start time comprises a time determined based on the first reference point and the quantity of second granularities; and the method further comprises:
sending second information, wherein the second information indicates the quantity of second granularities.

11. The method of any one of claims 6 to 10, wherein the first duration comprises a fifth duration length; and
wherein the fifth duration length is represented in at least one of the following manners:

the fifth duration length being represented based on a quantity of third granularities, wherein the third granularity corresponds to a sixth duration length;
the fifth duration length being represented based on a third value, wherein the third value corresponds to a second duration interval, the second duration interval is a preset duration range for the power class, and the fifth duration length falls within the preset duration range and is represented by the preset duration range; or
the fifth duration length being represented based on a fourth value, wherein the fourth value corresponds to a preset duration length for the power class.

12. The method of any one of claims 1 to 11, wherein the first information comprises a maximum output power (MOP) of the terminal, the MOP being determined based on a first output power, a power variation, and maximum power reduction (MPR), wherein the first output power is determined based on a second power class, and the power variation and the MPR are determined based on the second power class, or the power variation and the MPR are determined based on a third power class.

13. A communication method, comprising:
receiving first information, wherein the first information indicates a power class and is sent via a power headroom report (PHR).

14. The method of claim 13, wherein the first information is generated in a case that at least one of the following conditions is satisfied:

the power class being reduced to a first power class, wherein the first power class is lower than a second power class, and the second power class is a power class defined by a terminal and/or a power class initially reported by the terminal; or
the power class being recovered.

15. The method of claim 14, wherein the power being reduced is determined by:
determining that the power class is reduced in a case that an uplink (UL) duty cycle corresponding to the terminal sending a physical uplink shared channel (PUSCH) sent is greater than a first threshold corresponding to a current power class, wherein different power classes correspond to different first thresholds.

16. The method of claim 14 or 15, wherein the power class being recovered is determined by at least one of:

determining that the power class is recovered in a case that the terminal starts a next evaluation period; or
determining that the power class is recovered in a case that an uplink (UL) duty cycle corresponding to the terminal sending a physical uplink shared channel (PUSCH) is less than or equal to a second threshold.

17. The method of claim 16, wherein determining that the power class is recovered in a case that the terminal starts the next evaluation period comprises:
the power class being recovered to the power class defined by the terminal and/or the power class initially reported by the terminal.

18. The method of any one of claims 13 to 17, wherein the first information comprises at least one of:

a first power class to which the power class is reduced;
a third power class to which the power class is recovered;
a power class variation of a terminal;
an evaluation period of a terminal; or
a first duration corresponding to at least one of a first power class or a third power class, wherein the first duration indicates an estimated duration for at least one of the first power class or the third power class.

19. The method of claim 18, wherein the evaluation period comprises a first start time, the first start time being a start time of the evaluation period; and
wherein the first start time comprises at least one of:

a time corresponding to a system frame number (SFN) being 0; or
a time obtained by applying an offset to an SFN being 0.

20. The method of claim 18 or 19, wherein the evaluation period comprises a first duration length, and the first duration length is a duration length of the evaluation period; and
wherein the first duration length is represented in at least one of following manners:

the first duration length being represented based on a quantity of first granularities, wherein the first granularity corresponds to a second duration length;
the first duration length being represented based on a first value, wherein the first value corresponds to a first duration interval, the first duration interval is a preset duration range of the evaluation period, and the first duration length falls within the preset duration range and is represented by the preset duration range; or
the first duration length being represented based on a second value, wherein the second value corresponds to a preset duration length of the evaluation period.

21. The method of any one of claims 18 to 20, wherein the first duration comprises a second start time; and wherein the second start time comprises at least one of:

   a sending time of the PHR;
   a first start time corresponding to the evaluation period;
   a time determined based on a first reference point and a quantity of second granularities, wherein the first reference point is a time corresponding to a system frame number (SFN) being 0, and the second granularity corresponds to a third duration length;
   a time determined based on a second reference point, wherein the second reference point is a reference point adjacent to a sending time of the PHR, among reference points obtained by dividing the evaluation period based on a third granularity, and the third granularity corresponds to a fourth duration length; or
   a sending time of a physical uplink shared channel (PUSCH).

22. The method of claim 21, wherein the second start time comprises a time determined based on the first reference point and the quantity of second granularities; and the method further comprises:
   receiving second information, wherein the second information indicates the quantity of second granularities.

23. The method of any one of claims 18 to 22, wherein the first duration comprises a fifth duration length; and wherein the fifth duration length is represented in at least one of the following manners:

   the fifth duration length being represented based on a quantity of third granularities, wherein the third granularity corresponds to a sixth duration length;
   the fifth duration length being represented based on a third value, wherein the third value corresponds to a second duration interval, the second duration interval is a preset duration range for the power class, and the fifth duration length falls within the preset duration range and is represented by the preset duration range; or
   the fifth duration length being represented based on a fourth value, wherein the fourth value corresponds to a preset duration length for the power class.

24. The method of any one of claims 13 to 23, wherein the first information comprises a maximum output power (MOP) of the terminal, the MOP being determined based on a first output power, a power variation, and maximum power reduction (MPR), wherein the first output power is determined based on a second power class, and the power variation and the MPR are determined based on the second power class, or the power variation and the MPR are determined based on a third power class.

25. A communication method, performed by a terminal, comprising:
   sending first information to a network device, wherein the first information indicates a power class and is sent via a power headroom report (PHR).

26. A terminal, comprising:
   a transceiver module, configured to send first information, wherein the first information indicates a power class and is sent via a power headroom report (PHR).

27. A network device, comprising:
   a transceiver module, configured to receive first information, wherein the first information indicates a power class and is sent via a power headroom report (PHR).

28. A terminal, comprising:

   one or more processors,
   wherein the terminal is configured to implement the communication method of any one of claims 1 to 12.

29. A network device, comprising:

   one or more processors,
   wherein the network device is configured to implement the communication method of any one of claims 13 to 24.

30. A communication system, comprising a terminal and a network device, wherein the terminal is configured to implement the communication method of any one of claims 1 to 12, and the network device is configured to implement the communication method of any one of claims 13 to 24.

31. A non-transitory storage medium for storing instructions that, when executed by a communication device, cause the communication device to implement the communication method of any one of claims 1 to 12 or claims 13 to 24.

communication system 100

terminal 101 ——— network device 102

FIG. 1a

total UL transmisson power

transmission
power limit

time

FIG. 1b

total UL transmission power

maximum
transmission power
of the terminal

transmission
power limit

time

FIG. 1c

total UL transmission power

maximum
transmission power
of the terminal

transmission
power limit

transmission
suspension

time

FIG. 1d

| P | reserved | PH (type 1, PCell) |
|---|---|---|
| MPE or reserved bit | | maximum transmission power |

FIG. 1e

| $C_7$ | $C_6$ | $C_5$ | $C_4$ | $C_3$ | $C_2$ | $C_1$ | reserved |
|---|---|---|---|---|---|---|---|
| P | V | PH (type 2, SpCell or other MAC entity) | | | | | |
| MPE or reserved bit | | maximum transmission power 1 | | | | | |
| P | V | PH (type 1, Pcell) | | | | | |
| MPE or reserved bit | | maximum transmission power 2 | | | | | |
| P | V | PH (type X, serving cell 1) | | | | | |
| MPE or reserved bit | | maximum transmission power 3 | | | | | |

......

| P | V | PH (type X, serving cell n) | | | | | |
|---|---|---|---|---|---|---|---|
| MPE or reserved bit | | maximum transmission power m | | | | | |

FIG. 1f

terminal 101                                    network device 102

S2101, sending second information

(for example, indicating a quantity of second granularities)

S2102, sending first information

(for example, indicating a power class)

FIG. 2

S3101, sending second information
(for example, indicating a quantity of second granularities)

S3102, sending first information
(for example, indicating a power class)

FIG. 3a

S3201, sending first information
(for example, indicating a power class)

FIG. 3b

S4101, obtaining second information
(for example, indicating a quantity of second
granularities)

S4102, obtaining first information
(for example, indicating a power class)

FIG. 4a

S4201, obtaining first information
(for example, indicating a power class)

FIG. 4b

S5101, a terminal 101 sends first information to the
network device 102
(for example, indicating a power class)

FIG. 5

terminal 6100

transceiver module    6101

FIG. 6a

network device 6200

transceiver module    6201

EP 4 750 174 A1

FIG. 6b

communication device 7100

FIG. 7a

chip 7200

FIG. 7b

## INTERNATIONAL SEARCH REPORT

| International application No. |
| --- |
| **PCT/CN2023/108009** |

| A. | CLASSIFICATION OF SUBJECT MATTER |
| --- | --- |

H04W 52/36(2009.01)i

According to International Patent Classification (IPC) or to both national classification and IPC

| B. | FIELDS SEARCHED |
| --- | --- |

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNTXT, ENTXTC, DWPI, VEN, 3GPP: 功率, 回退, 回落, 恢复, 等级, 功率余量报告, 颗粒度, 占空比, 变化量, 最大功率衰减, 评估周期, 持续, 发送, 时间, 时刻, 调整, 变化, power, reduction, MPR, class, PUSCH, fallback, powerclass, period, duration, time, change, adjust

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 110720241 A (GUANGDONG OPPO MOBILE TELECOMMUNICATIONS CORP., LTD.) 21 January 2020 (2020-01-21) description, paragraphs 4-81 | 1-31 |
| X | CN 111543092 A (GUANGDONG OPPO MOBILE TELECOMMUNICATIONS CORP., LTD.) 14 August 2020 (2020-08-14) claims 1-33 | 1-31 |
| A | CN 113676991 A (VIVO MOBILE COMMUNICATION CO., LTD.) 19 November 2021 (2021-11-19) entire document | 1-31 |
| A | US 2021204227 A1 (TELEFONAKTIEBOLAGET LM ERICSSON (PUBL)) 01 July 2021 (2021-07-01) entire document | 1-31 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **19 December 2023** | **27 February 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/108009**

| Patent document cited in search report | | | Publication date (day/month/year) | Patent family member(s) | | | Publication date (day/month/year) |
|---|---|---|---|---|---|---|---|
| CN | 110720241 | A | 21 January 2020 | WO | 2020029077 | A1 | 13 February 2020 |
| CN | 111543092 | A | 14 August 2020 | None | | | |
| CN | 113676991 | A | 19 November 2021 | None | | | |
| US | 2021204227 | A1 | 01 July 2021 | EP | 3834508 | A1 | 16 June 2021 |
| | | | | WO | 2020032866 | A1 | 13 February 2020 |

Form PCT/ISA/210 (patent family annex) (July 2022)